# EUROPEAN PATENT SPECIFICATION

(11) **EP 4 283 075 B1**
(45) Date of publication and mention of the grant of the patent: **16.10.2024**
(21) Application number: 22206632.6
(22) Date of filing: 10.11.2022
(51) Int. Cl.: E04G 23/02, E04H 9/02

(54) **ADAPTIVE CAULKING MONITORING DEVICE AND CAULKING RESET METHOD**
ADAPTIVE VERSTEMMUNGSÜBERWACHUNGSVORRICHTUNG UND VERSTEMMUNGSRÜCKSETZUNGSVERFAHREN
DISPOSITIF DE SURVEILLANCE DE CALFEUTRAGE ADAPTATIF ET PROCÉDÉ DE RÉINITIALISATION DE CALFEUTRAGE

(30) Priority: 24.05.2022 CN 202210567142
(43) Date of publication of application: 29.11.2023
(73) Proprietor: China Three Gorges Co., Ltd., Wuhan Hubei 430010 (CN)
(72) Inventor: GAO, Chao, Wuhan 430010 (CN); WANG, Zhiwei, Wuhan 430010 (CN); LI, Yuxin, Wuhan 430010 (CN); YU, Jie, Wuhan 430010 (CN); OUYANG, Jianshu, Wuhan 430010 (CN)
(74) Representative: Groth & Co. KB

(56) References cited:
- CN-A- 114 086 794
- US-A1- 2017 350 152

## Description

### TECHNICAL FIELD

The present invention relates to the technical field of reinforcement of building structures, particularly to an adaptive caulking monitoring device and a caulking reset method.

### BACKGROUND

Structural gaps are commonly found in civil engineering industry and civil buildings. The gaps can be roughly divided into two categories, one category is cracks caused by structural damage due to stress overload, such as structural cracks, brittle fracture cracks, settlement cracks, etc.; the other category is construction gaps which are specially pre-designed gaps required by construction, such as seismic gaps, temperature expansion gaps in modern structures, and gaps reserved between mortise and tenon nodes for easy installation in traditional wooden structural buildings. Although some of the gaps are necessary for the building structure, the existence of gaps poses potential safety risks to structural safety, especially the safety hazard problem under the effect of earthquakes, such as beam-column nodes, when the nodes have gaps, the node stiffness and bearing capacity will be significantly reduced.

The prior art (see CN 114 086 794 B) discloses a longitudinal gap caulking and monitoring reset device, including: a first panel, wherein the first panel is provided with multiple guide holders; a second panel, arranged opposite to the first panel; a stranded wire, wound on the guide holders, wherein a first end of the stranded wire is connected to a stranded wire end seat, the stranded wire end seat is fixedly connected to the second panel, a second end of the stranded wire protrudes from a space between the second panel and the first panel and is connected to a fastening device, the fastening device is able of tightening and releasing the stranded wire; resilient assemblies, arranged in four groups, wherein the resilient assembly is arranged between the first panel and the second panel and is adjacent to a corner of the second panel respectively, and a first end of the resilient assembly is fixedly connected to the first panel and a second end of the resilient assembly is fixedly connected to the second panel; gas-filled columns, arranged in two groups, a connecting line of one group of gas-filled columns intersects with a connecting line of the other group of gas-filled columns to form a cross, each group of gas-filled columns includes two gas-filled columns, the first panel is provided with a gas channel corresponding to each of the gas-filled columns and a gas slot communicated to a first end of the gas channel, the gas-filled column is a resilient hollow column body with an opening at a first end and a closed second end, the first panel is provided with a first limiting slot around the gas slot, a first end of the gas-filled column is caulked into the first limiting slot and the opening is opposite to the gas slot, a second end of the gas-filled column is abutted against the second panel, the second end of the gas channel is provided with a gas nozzle, and the gas nozzle is connected with a gas pressure gauge.

The above prior art is capable of taking into account the gap caulking while having the functions of gap deformation monitoring and gap reset after earthquakes. However, the above prior art ignores the problem that two side walls of the gap are not absolutely flat, and cannot be applied to caulking of the gap when the side walls of the gap are not flat, so the application scope is narrow.

### SUMMARY OF THE INVENTION

Therefore, the technical problem to be solved by the present invention is to overcome the defect that the longitudinal gap caulking and monitoring reset device of the prior art cannot be applied to the caulking when the side wall of the gap is not flat, so as to provide an adaptive caulking monitoring device and a caulking reset method that can be adapted to the caulking when the side wall of the gap is not flat.

In order to solve the above technical problem, the present invention provides an adaptive caulking monitoring device, including: a buffer assembly, including two rows and two columns of gas-filled columns, wherein a reset gas hole is formed on a side wall of each of the gas-filled columns, the reset gas hole is connected to a reset gas tube, and a reset gas nozzle is arranged at an end of the reset gas tube; two adaptive plates, which are respectively a first adaptive plate and a second adaptive plate and which are symmetrically distributed on two sides of the buffer assembly, wherein the first adaptive plate and the second adaptive plate both include a panel, resilient columns and springs, the panel includes a bottom cover adjacent to the buffer assembly and a top cover away from the buffer assembly, multiple rows and columns of resilient column holes are arranged in an array in the top cover, spring seats in one-to-one correspondence with the resilient column holes are distributed in an array in the panel, a first end of each spring seat is fixedly arranged in the bottom cover, a second end of each spring seat is arranged in a corresponding resilient column hole and is flush with an outer surface of the top cover, an expansion slot is arranged in each spring seat, a first end of the expansion slot is arranged at a second end of the spring seat, a second end of the expansion slot is arranged in each spring seat, a blowing chamber is arranged in each spring seat, a first end of the blowing chamber extends to the first end of the spring seat, a second end of the blowing chamber extends to the expansion slot, a pushing member capable of moving along a length direction of the blowing chamber is arranged in the blowing chamber, the pushing member is adapted to press the expansion slot or press a chamber wall of the blowing chamber adjacent to its second end, a gas channel structure communicated with each blowing chamber is arranged in the bottom cover, the gas channel structure includes a limiting gas nozzle protruding from the panel, each resilient column includes a column body and a column cap, the column body is of a hollow structure and is arranged outside a corresponding spring seat, the column cap is arranged at one end of the column body, a corresponding spring is arranged in the column body with one end of the spring (403) abutted against a second end of the spring seat and with the other end of the spring (403) abutted against the column cap; a monitoring assembly, including: a first monitoring ruler, fixedly arranged at the bottom end of the panel in the first adaptive plate and extending towards the panel in the second adaptive plate; a first extension pointer, including a first extension pointer fixed end and a first extension pointer indicating end, wherein the first extension pointer fixed end is fixedly arranged at the bottom end of the panel in the second adaptive plate and located at a side away from the monitoring ruler, and the first extension pointer indicating end extends to the first monitoring ruler; a first pointer, including a first pointer fixed end and a first pointer indicating end, wherein the first pointer fixed end is fixedly arranged at the bottom end of the panel in the second adaptive plate and located at a side adjacent to the first monitoring ruler, and the first pointer indicating end extends to the first monitoring ruler; a second monitoring ruler, fixedly arranged at the top end of the panel in the first adaptive plate and extending towards the panel in the second adaptive plate, wherein the second monitoring ruler and the first monitoring ruler are arranged on the same side of the first adaptive plate and the second adaptive plate; a second extension pointer, including a second extension pointer fixed end and a second extension pointer indicating end, wherein the second extension pointer fixed end is fixedly arranged at the top end of the panel in the second adaptive plate and located at a side away from the second monitoring ruler, and the second extension pointer indicating end extends to the second monitoring ruler; a second pointer, including a second pointer fixed end and a second pointer indicating end, wherein the second pointer fixed end is fixedly arranged at the top end of the panel in the second adaptive plate and located at a side adjacent to the second monitoring ruler, and the second pointer indicating end extends to the second monitoring ruler.

Optionally, the first monitoring ruler includes:
a first monitoring ruler end seat, fixedly arranged at the bottom end of the panel in the first adaptive plate;
a first distal dial scale, vertically connected to the first monitoring ruler end seat and extending towards the panel in the second adaptive plate, wherein the first extension pointer indicating end extends to the first distal dial scale;
a first proximal dial scale, vertically connected to an end of the first monitoring ruler end seat to form an L-shape and extending towards the panel in the second adaptive plate, wherein the first pointer indicating end extends to the first proximal dial scale, and the graduations on the first proximal dial scale is denser than the graduations on the first distal dial scale;
and/or, the second monitoring ruler includes:
   a second monitoring ruler end seat, fixedly arranged at the top end of the panel in the first adaptive plate;
   a second distal dial scale, vertically connected to the second monitoring ruler end seat and extending towards the panel in the second adaptive plate, wherein the second extension pointer indicating end extends to the second distal dial scale; and
   a second proximal dial scale, vertically connected to an end of the second monitoring ruler end seat to form an L-shape and extending towards the panel in the second adaptive plate, wherein the second pointer indicating end extends to the second proximal dial scale, and the graduations on the second proximal dial scale is denser than the graduations on the second distal dial scale.

Optionally, the first extension pointer fixed end and the first extension pointer indicating end are connected to each other by a first rod arm, and a cross-sectional area of the first extension pointer indicating end is smaller than a cross-sectional area of the first rod arm;
and/or, the second extension pointer fixed end and the second extension pointer indicating end are connected to each other by a second rod arm, and a cross-sectional area of the second extension pointer indicating end is smaller than a cross-sectional area of the second rod arm.

Optionally, a cross-sectional area of the first pointer indicating end is smaller than a cross-sectional area of the first pointer fixed end;
and/or, a cross-sectional area of the second pointer indicating end is smaller than a cross-sectional area of the second pointer fixed end.

Optionally, the blowing chamber is of a round frustrum shape, the cross-sectional area of the second end of the blowing chamber is smaller than the cross-sectional area of the first end of the blowing chamber, correspondingly, the pushing member is of a round frustrum shape, the cross-sectional area of a smaller end of the pushing member is slightly greater than the cross-sectional area of the second end of the blowing chamber, the cross-sectional area of a bigger end of the pushing member is smaller than the cross-sectional area of the first end of the blowing chamber, and the length of the pushing member is smaller than the length of the blowing chamber.

Optionally, a cavity is formed between the bottom cover and the top cover, the spring seat is arranged in the cavity, the resilient column further includes an annular column seat fixedly arranged at an end of the column body away from the column cap, and the annular column seat is sleeved outside a corresponding spring seat and is movably arranged between a top wall and a bottom wall of the cavity.

Optionally, the expansion slot is a cross-shaped slot.

Optionally, the gas channel structure includes:
sub-gas channels, each communicated to a corresponding blowing chamber, wherein the sub-gas channel is vertical to the bottom cover;
multiple branch gas channels, wherein each of the branch gas channels is communicated to the sub-gas channels arranged in the same column, and the branch gas channel is parallel to the outer surface of the bottom cover facing towards the buffer assembly; and
a main gas channel, wherein the main gas channel is communicated to the multiple branch gas channels, the main gas channel is vertical to the branch gas channels and is parallel to the outer surface of the bottom cover facing towards the buffer assembly, and the limiting gas nozzle is connected to the main gas channel.

Optionally, the panel is provided with multiple limiting slots, and the gas-filled columns are arranged in the limiting slots;
and/or, the side wall of the gas-filled column is corrugated.

The present invention further provides a caulking reset method applied to the adaptive caulking monitoring device, wherein the caulking reset method includes:
S1. compressing the gas-filled columns such that the total thickness of the adaptive caulking monitoring device is smaller than the width of a gap to be caulked;
S2. after caulking the adaptive caulking monitoring device into the gap, relaxing the compression on the gas-filled columns, such that at least part of the resilient columns and their internal springs are compressed by side walls of the gap;
S3. feeding a high-pressure gas into the gas channel structure by an external gas pump connected on the limiting gas nozzle, wherein gas enters each blowing chamber and blows up the pushing member, the pushing member presses the expansion slot, the expansion slot expands outwards to press tightly the resilient column, so that the resilient column is locked in the resilient column hole;
S4. recording the number indicated by the first extension pointer on the first monitoring ruler, the number indicated by the first pointer on the first monitoring ruler, the number indicated by the second extension pointer on the second monitoring ruler, and the number indicated by the second pointer on the second monitoring ruler as initial values for deformation monitoring of a building member of a gap node; and
when the gap has undergone changes in position and shape, the caulking reset method further includes:
   S5. feeding gas to the gas-filled columns in turn by the external gas pump connected on the reset gas nozzle for each gas-filled column subject to compression in turn, and adjusting spacing between the first adaptive plate and the second adaptive plate under the supporting effect of the gas-filled columns, until the number indicated by the first extension pointer on the first monitoring ruler, the number indicated by the first pointer on the first monitoring ruler, the number indicated by the second extension pointer on the second monitoring ruler, and the number indicated by the second pointer on the second monitoring ruler all reach the initial values.

Technical solutions of the present invention have the following advantages:
In the adaptive caulking monitoring device provided in the present invention, by setting a buffer assembly between the first adaptive plate and the second adaptive plate, pressure can be applied to the first adaptive plate and the second adaptive plate respectively on the left and right sides of the entire adaptive caulking monitoring device, such that the gas-filled column constituting the buffer assembly is compressed. When the total thickness of the entire adaptive caulking monitoring device is smaller than the width of the gap to be caulked, the adaptive caulking monitoring device can be easily caulked into the gap; after the adaptive caulking monitoring device is caulked into the gap, the pressure on the first adaptive plate and the second adaptive plate is relaxed, i.e., the compression on the gas-filled column is relaxed, and a resilient force of the gas-filled column increases a spacing between the first adaptive plate and the second adaptive plate and makes the first adaptive plate and the second adaptive plate move towards side walls of the gap, respectively. The resilient column and their internal springs are partially compressed according to the flatness of the two side walls of the gap, thereby completing adaptive adjustment of the side walls which are not flat; after that, a high-pressure gas is fed to the gas channel structure by an external gas pump connected on the limiting gas nozzle, and the high-pressure gas enters each blowing chamber through the gas channel structure to blow up the pushing member, the pushing member presses the expansion slot, and the expansion slot expands outwards to abut against an inner wall of the column body, and the structures on two sides of the expansion slot press the column body, and have a large friction force with an inner wall of the column body and press tightly the resilient column. The adaptively adjusted resilient column is locked in the resilient column hole; the number indicated by the first extension pointer on the first monitoring ruler, the number indicated by the first pointer on the first monitoring ruler, the number indicated by the second extension pointer on the second monitoring ruler, and the number indicated by the second pointer on the second monitoring ruler are recorded as initial values for deformation monitoring of a building member of a gap node; after the gap has undergone changes in position and shape, gas is fed to the gas-filled column in turn by the external gas pump connected on the reset gas nozzle for each gas-filled column subject to compression in turn, and the spacing between the first adaptive plate and the second adaptive plate is adjusted under the supporting effect of the gas-filled columns, until the number indicated by the first extension pointer on the first monitoring ruler, the number indicated by the first pointer on the first monitoring ruler, the number indicated by the second extension pointer on the second monitoring ruler, and the number indicated by the second pointer on the second monitoring ruler reach the initial values, when each indicated number reaches the initial value, it means that the gap spacing returns to that before deformation and the member is reset. Wherein, the gas-filled column takes into account the roles of damping and reset supporting, thereby on the one hand increasing the damping of the building nodes and improving the energy dissipation capacity and the impact resistance of the nodes during earthquakes, and on the other hand realizing the effect of supporting by feeding gas to achieve the function of resetting nodes after earthquakes. By setting the first monitoring ruler and the second monitoring ruler, the multi-point simultaneous deformation monitoring of the gap nodes can be completed, and the node reset can be guided based on monitoring values. Therefore, the adaptive caulking monitoring device not only has the functions of caulking, monitoring and resetting, but also has good adaptability to side walls of non-planar complex gaps such as uneven and honeycomb pockmarked surfaces.

### BRIEF DESCRIPTION OF THE DRAWINGS

In order to more clearly illustrate technical solutions in specific embodiments or prior art of the present invention, the following is a brief introduction of the accompanying drawings that are required for the description of the specific implementations or the prior art, and apparently, the accompanying drawings in the following description are some implementations of the present invention, and that other accompanying drawings can be obtained by those skilled in the art according to these accompanying drawings without any creative effort.
Fig. 1 is a structural schematic diagram of the adaptive caulking monitoring device provided in Embodiment 1 of the present invention;
Fig. 2 is an enlarged view of A in Fig. 1;
Fig. 3 is an enlarged view of B in Fig. 1;
Fig. 4 is an exploded view of Fig. 1;
Fig. 5 is a structural schematic diagram of the second monitoring ruler in Fig. 4;
Fig. 6 is a front view of the panel in Fig. 4;
Fig. 7 is an enlarged view of C in Fig. 6;
Fig. 8 is a sectional view of A-A of Fig. 6;
Fig. 9 is an enlarged view of D in Fig. 8;
Fig. 10 is a side view of the panel in Fig. 4;
Fig. 11 is a sectional view of B-B of Fig. 10;
Fig. 12 is a sectional view of C-C of Fig. 10;
Fig. 13 is a structural schematic diagram of the first adaptive plate in Fig. 4;
Fig. 14 is a perspective view of the first adaptive plate in Fig. 4;
Fig. 15 is a structural schematic diagram of the gas-filled column adjacent to the inner end;
Fig. 16 is a structural schematic diagram of the gas-filled column adjacent to the outer end;
Fig. 17 is a top view of the gas-filled column of Fig. 16;
Fig. 18 is a sectional view of D-D of Fig. 17.

### Reference numerals:

1, gas-filled column; 101, reset gas hole; 102, bottom plate; 2, reset gas tube; 3, reset gas nozzle; 4, first adaptive plate; 401, panel; 4011, bottom cover; 4012, top cover; 4013, resilient column hole; 4014, spring seat; 4015, expansion slot; 4016, blowing chamber; 4017, pushing member; 4018, limiting gas nozzle; 4019, cavity; 40110, sub-gas channel; 40111, branch gas channel; 40112, main gas channel; 40113, limiting slot; 402, resilient column; 4021, column body; 4022, column cap; 4023, annular column seat; 403, spring; 5, second adaptive plate; 6, first monitoring ruler; 601, first monitoring ruler end seat; 602, first distal dial scale; 603, first proximal dial scale; 7, first extension pointer; 701, first extension pointer fixed end; 702, the first extension pointer indicating end; 703, first rod arm; 704, first support; 8, first pointer; 801, first pointer fixed end; 802, first pointer indicating end; 9, second monitoring ruler; 901, second monitoring ruler end seat; 902, second distal dial scale; 903, second proximal dial scale; 10, second extension pointer; 1001, second extension pointer fixed end; 1002, second extension pointer indicating end; 1003, second rod arm; 1004, second support; 11, second pointer; 1101, second pointer fixed end; 1102, second pointer indicating end.

### DETAILED DESCRIPTION

The following is a clear and complete description of the technical solution of the present invention in combination with the accompanying drawings, and apparently, the embodiments described are some, but not all, of the embodiments of the present invention.

In the description of the present invention, it should be noted that the orientational or positional relationship indicated by the terms "center", "top", "bottom", "left", "right", "vertical", "horizontal", "inside", "outside" is the orientational or positional relationship based on the accompanying drawings, and is merely intended to facilitate and simplify description of the present invention, rather than indicating or implying that the device or element referred to must have a particular orientation, or must be constructed and operated in a particular orientation, and therefore it cannot be construed as limiting the present invention. Furthermore, the terms "first", "second" and "third" are merely used for descriptive purposes and are not to be construed as indicating or implying relative importance.

In the description of the present invention, it should be noted that, unless otherwise expressly specified and defined, the terms "installed", "connected", "connecting" should be understood in a broad sense. For example, the connection can be a fixed connection, a detachable connection, or an integrated connection; the connection can be a mechanical connection or an electrical connection; the connection can be a direct connection or an indirect connection through an intermediate medium, and the connection can be a communication within two elements. To those skilled in the art, the specific meaning of the above terms in the context of the present invention can be understood according to specific conditions.

### Embodiment 1

Structural gaps are commonly found in civil engineering industry and civil buildings. The gaps can be roughly divided into two categories, one category is cracks caused by structural damage due to stress overload, such as structural cracks, brittle fracture cracks, settlement cracks, etc.; the other category is construction gaps which are specially pre-designed gaps required by construction, such as seismic gaps, temperature expansion gaps in modern structures, and gaps reserved between mortise and tenon nodes for easy installation in traditional wooden structural buildings. Although some of the gaps are necessary for the building structure, the existence of gaps poses potential safety risks to structural safety, especially the safety hazard problem under the effect of earthquakes, such as beam-column nodes, when the nodes have gaps, the node stiffness and bearing capacity will be significantly reduced.

The longitudinal gap caulking and monitoring reset device disclosed in the prior art ignores the problem that two side walls of the gap are not absolutely flat and cannot be adapted to caulking when the side walls of the gap are not flat, therefore the application scope is narrow.

To this end, the present embodiment provides an adaptive caulking monitoring device which can be adapted to caulking when the side walls of the gap are not flat.

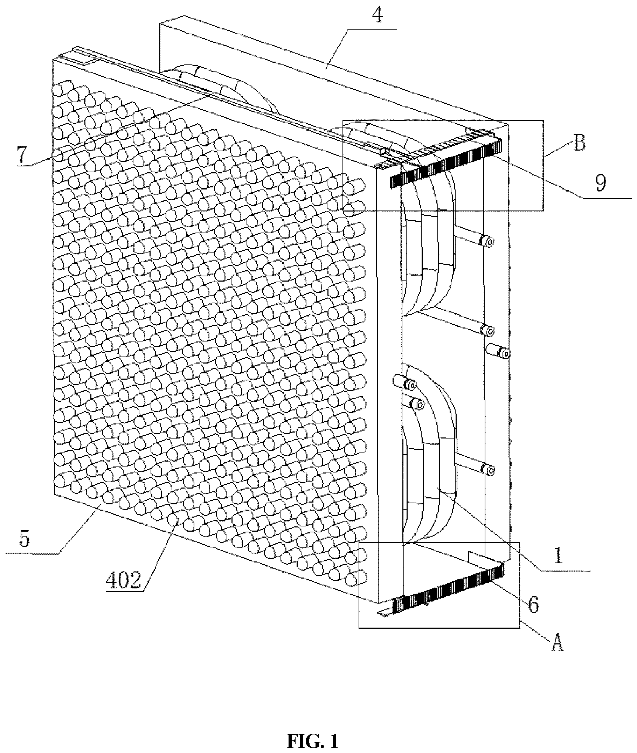

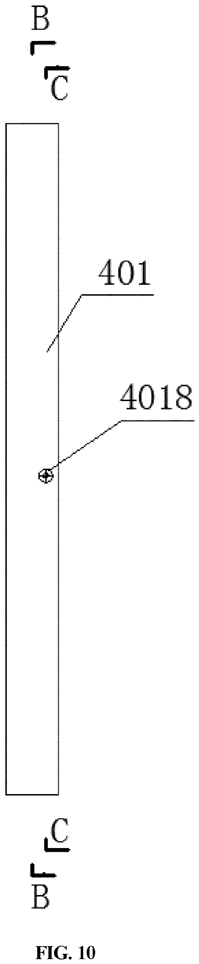

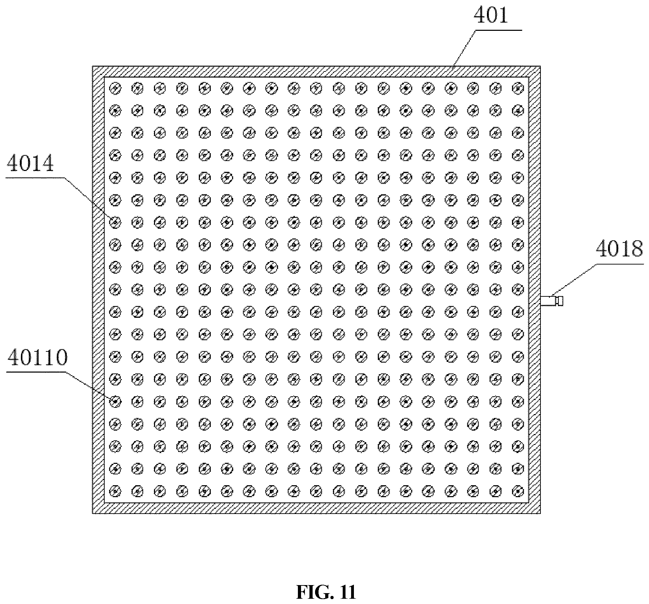

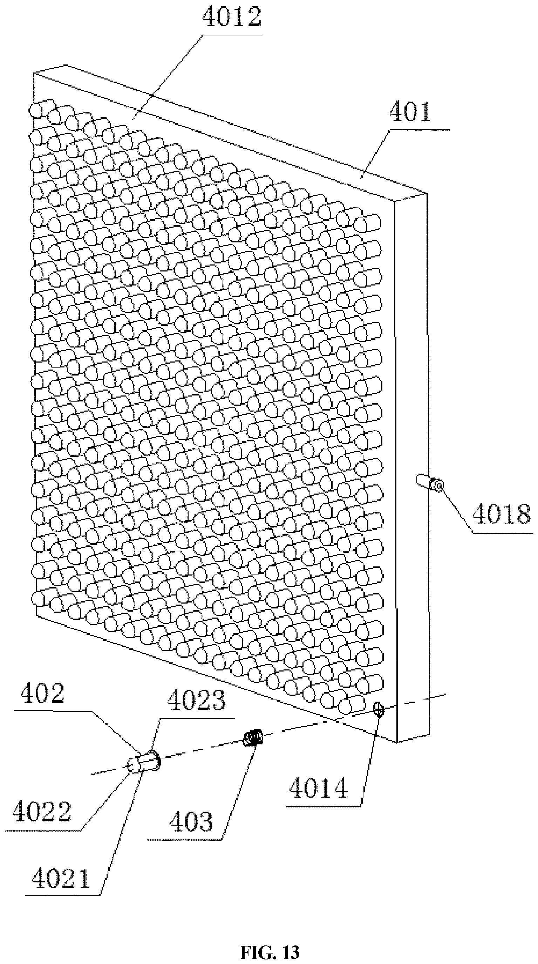

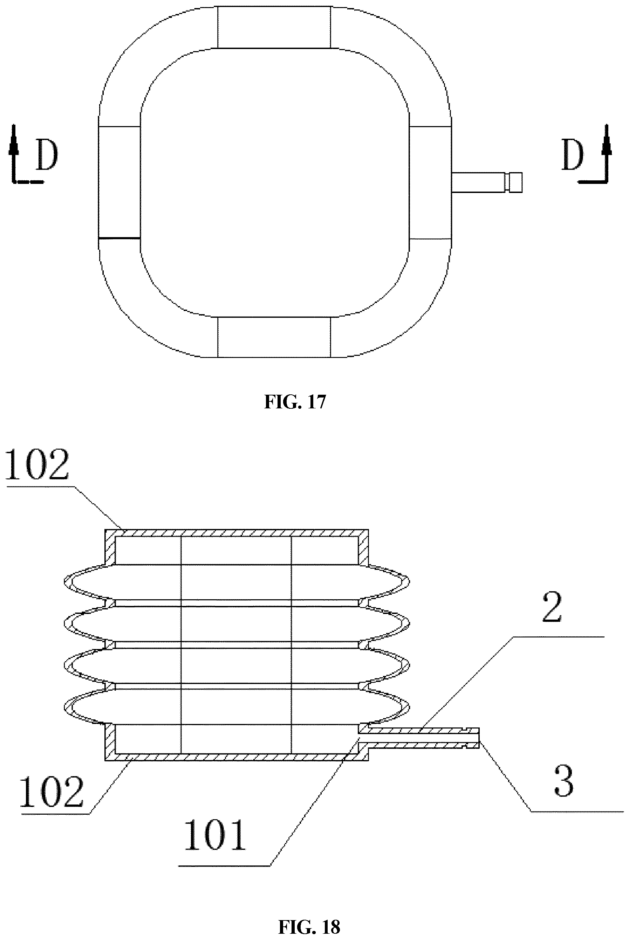

In one implementation, as shown in Fig. 1 to Fig. 18, the adaptive caulking monitoring device includes a buffer assembly, adaptive plates, and a monitoring assembly.

Wherein the buffer assembly includes two rows and two columns of gas-filled columns 1, wherein a reset gas hole 101 is formed on a side wall of each of the gas-filled columns 1, the reset gas hole 101 is connected to a reset gas tube 2, and a reset gas nozzle 3 is arranged at an end of the reset gas tube 2; two adaptive plates, which are respectively a first adaptive plate 4 and a second adaptive plate 5 and which are symmetrically distributed on two sides of the buffer assembly, wherein the first adaptive plate 4 and the second adaptive plate 5 both include a panel 401, resilient columns 402 and springs 403, the panel 401 includes a bottom cover 4011 adjacent to the buffer assembly and a top cover 4012 away from the buffer assembly, multiple rows and columns of resilient column holes 4013 are arranged in an array in the top cover 4012, spring seats 4014 in one-to-one correspondence with the resilient column holes 4013 are distributed in an array in the panel 401, a first end of each spring seat 4014 is fixedly arranged in the bottom cover 4011, a second end of each spring seat 4014 is arranged in a corresponding resilient column hole 4013 and is flush with an outer surface of the top cover 4012, an expansion slot 4015 is arranged in each spring seat 4014, a first end of the expansion slot 4015 is arranged at a second end of the spring seat 4014, a second end of the expansion slot 4015 is arranged in each spring seat 4014, a blowing chamber 4016 is arranged in each spring seat 4014, a first end of the blowing chamber 4016 extends to the first end of the spring seat 4014, a second end of the blowing chamber 4016 extends to the expansion slot 4015, a pushing member 4017 capable of moving along a length direction of the blowing chamber 4016 is arranged in the blowing chamber 4016, the pushing member 4017 is adapted to press the expansion slot 4015 or press a chamber wall of the blowing chamber 4016 adjacent to its second end, a gas channel structure communicated with each blowing chamber 4016 is arranged in the bottom cover 4011, the gas channel structure includes a limiting gas nozzle 4018 protruding from the panel 401, each resilient column 402 includes a column body 4021 and a column cap 4022, the column body 4021 is of a hollow structure and is arranged outside a corresponding spring seat, the column cap 4022 is arranged at one end of the column body 4021, a corresponding spring 403 is arranged in the column body 4021 with one end of the spring (403) abutted against a second end of the spring seat 4014 and with the other end of the spring (403) abutted against the column cap 4022. A monitoring assembly includes a first monitoring ruler 6, a first extension pointer 7, a first pointer 8, a second monitoring ruler 9, a second extension pointer 10 and a second pointer 11. Wherein the first monitoring ruler 6 is fixedly arranged at the bottom end of the panel 401 in the first adaptive plate 4 and extends towards the panel 401 in the second adaptive plate 5; the first extension pointer 7 includes a first extension pointer fixed end 701 and a first extension pointer indicating end 702, wherein the first extension pointer fixed end 701 is fixedly arranged at the bottom end of the panel 401 in the second adaptive plate 5 and located at a side away from the monitoring ruler 6, and the first extension pointer indicating end 702 extends to the first monitoring ruler 6; the first pointer 8 includes a first pointer fixed end 801 and a first pointer indicating end 802, wherein the first pointer fixed end 801 is fixedly arranged at the bottom end of the panel 401 in the second adaptive plate 5 and located at a side adjacent to the first monitoring ruler 6, and the first pointer indicating end 802 extends to the first monitoring ruler 6; the second monitoring ruler 9 is fixedly arranged at the top end of the panel 401 in the first adaptive plate 4 and extends towards the panel 401 in the second adaptive plate 5, wherein the second monitoring ruler 9 and the first monitoring ruler 6 are arranged on the same side of the first adaptive plate 4 and the second adaptive plate 5; the second extension pointer 10 includes a second extension pointer fixed end 1001 and a second extension pointer indicating end 1002, wherein the second extension pointer fixed end 1001 is fixedly arranged at the top end of the panel 401 in the second adaptive plate 5 and located at a side away from the second monitoring ruler 9, and the second extension pointer indicating end 1002 extends to the second monitoring ruler 9; and the second pointer 11 includes a second pointer fixed end 1101 and a second pointer indicating end 1102, wherein the second pointer fixed end 1101 is fixedly arranged at the top end of the panel 401 in the second adaptive plate 5 and located at a side adjacent to the second monitoring ruler 9, and the second pointer indicating end 1102 extends to the second monitoring ruler 9.

In the present implementation, by setting a buffer assembly between the first adaptive plate 4 and the second adaptive plate 5, pressure can be applied to the first adaptive plate 4 and the second adaptive plate 5 respectively on the left and right sides of the entire adaptive caulking monitoring device, such that the gas-filled column 1 constituting the buffer assembly is compressed. When the total thickness of the entire adaptive caulking monitoring device is smaller than the width of the gap to be caulked, the adaptive caulking monitoring device can be easily caulked into the gap; after the adaptive caulking monitoring device is caulked into the gap, the pressure on the first adaptive plate 4 and the second adaptive plate 5 is relaxed, i.e., the compression on the gas-filled column 1 is relaxed, and a resilient force of the gas-filled column 1 increases a spacing between the first adaptive plate 4 and the second adaptive plate 5 and makes the first adaptive plate 4 and the second adaptive plate 5 move towards side walls of the gap, respectively. The resilient column 402 and their internal springs 403 are partially compressed according to the flatness of the two side walls of the gap, thereby completing adaptive adjustment of the side walls which are not flat; after that, a high-pressure gas is fed to the gas channel structure by an external gas pump connected on the limiting gas nozzle 4018, and the high-pressure gas enters each blowing chamber 4016 through the gas channel structure to blow up the pushing member 4017, the pushing member 4017 presses the expansion slot 4015 or presses a chamber wall of the blowing chamber 4016 adjacent to its second end, and the expansion slot 4015 expands outwards to abut against an inner wall of the column body 4021, and the structures on two sides of the expansion slot 4015 press the column body 4021, and have a large friction force with an inner wall of the column body 4021 and press tightly the resilient column 402. The adaptively adjusted resilient column 402 is locked in the resilient column hole 4013, and will not influence deformation monitoring and supporting reset on the nodes due to deformation of the resilient column 402 itself; the number indicated by the first extension pointer 7 on the first monitoring ruler 6, the number indicated by the first pointer 8 on the first monitoring ruler 6, the number indicated by the second extension pointer 10 on the second monitoring ruler 9, and the number indicated by the second pointer 11 on the second monitoring ruler 9 are recorded as initial values for deformation monitoring of a building member of a gap node; after the gap has undergone changes in position and shape, gas is fed to the gas-filled column 1 in turn by the external gas pump connected on the reset gas nozzle 3 for each gas-filled column 1 subject to compression in turn, and the spacing between the first adaptive plate 4 and the second adaptive plate 5 is adjusted under the supporting effect of the gas-filled columns 1, until the number indicated by the first extension pointer 7 on the first monitoring ruler 6, the number indicated by the first pointer 8 on the first monitoring ruler 6, the number indicated by the second extension pointer 10 on the second monitoring ruler 9, and the number indicated by the second pointer 11 on the second monitoring ruler 9 reach the initial values, when each indicated number reaches the initial value, it means that the gap spacing returns to that before deformation and the member is reset. Wherein, the gas-filled column 1 takes into account the roles of damping and reset supporting, thereby on the one hand increasing the damping of the building nodes and improving the energy dissipation capacity and the impact resistance of the nodes during earthquakes, and on the other hand realizing the effect of supporting by feeding gas to achieve the function of resetting nodes after earthquakes. By setting the first monitoring ruler 6 and the second monitoring ruler 9, the multi-point simultaneous deformation monitoring of the gap nodes can be completed, and the node reset can be guided based on the monitoring values. Therefore, the adaptive caulking monitoring device not only has the functions of caulking, monitoring and resetting, but also has good adaptability to side walls of non-planar complex gap such as uneven and honeycomb pockmarked surfaces.

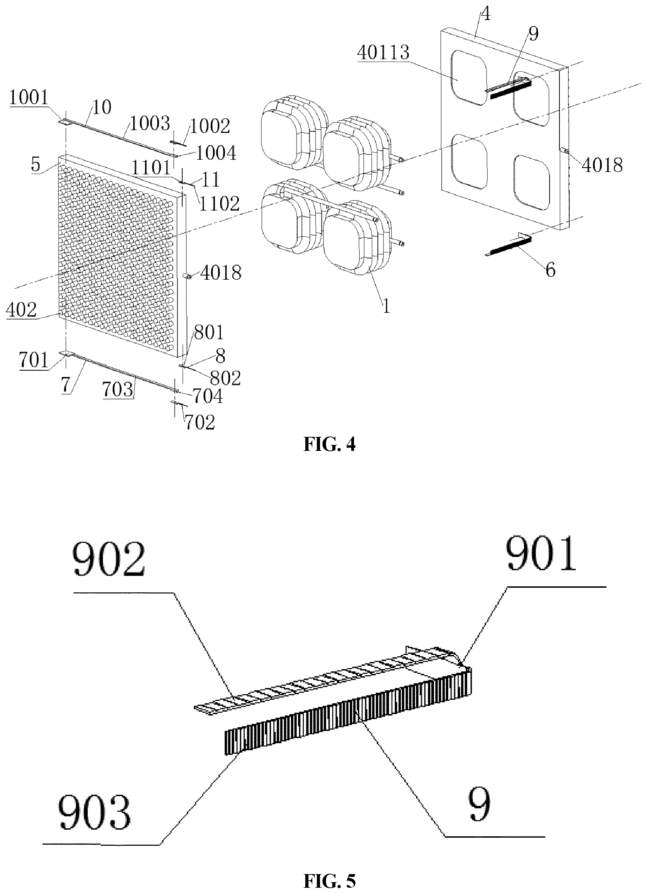

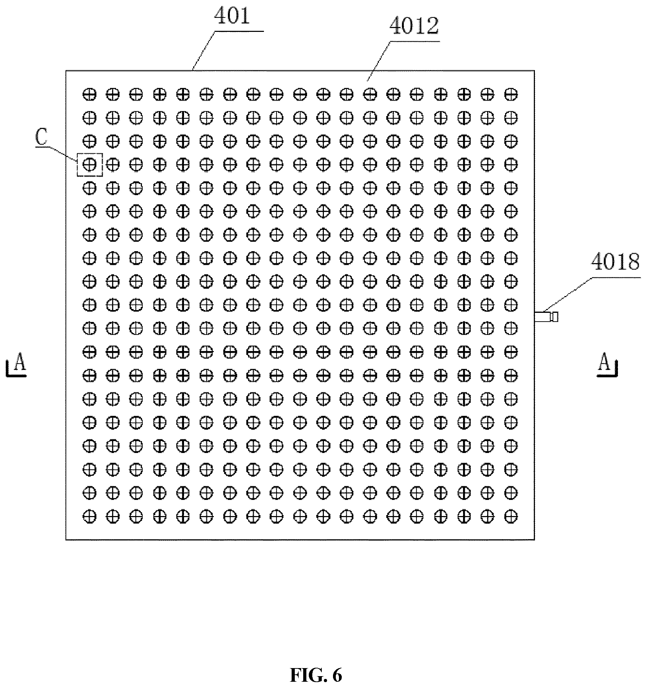

In combination with Fig. 1 and Fig. 4, the resilient columns 402 arranged in the same horizontal direction are a row of resilient columns 402, and the resilient columns 402 arranged in the same vertical direction are a column of resilient columns 402. In combination with Fig. 6, the resilient column holes 4013 arranged in the same horizontal direction are a row of resilient column holes 4013, and the resilient column holes 4013 arranged in the same vertical direction are a column of resilient column holes 4013.

Based on the above implementation, in a preferred implementation, the first monitoring ruler 6 includes a first monitoring ruler end seat 601, a first distal dial scale 602 and a first proximal dial scale 603. The first monitoring ruler end seat 601 is fixedly arranged at the bottom end of the panel 401 in the first adaptive plate 4; the first distal dial scale 602 is vertically connected to the first monitoring ruler end seat 601 and extends towards the panel 401 in the second adaptive plate 5, and the first extension pointer indicating end 702 extends to the first distal dial scale 602; the first proximal dial scale 603 is vertically connected to an end of the first monitoring ruler end seat 601 in an L-shape and extends towards the panel 401 in the second adaptive plate 5, the first pointer indicating end 802 extends to the first proximal dial scale 603, and the graduations on the first proximal dial scale 603 is denser than the graduations on the first distal dial scale 602. In the present implementation, by setting the first distal dial scale 602 and the first proximal dial scale 603, since the first extension pointer fixed end 701 is farther away from the first monitoring ruler 6, movement of the end of the panel 401 in the second adaptive plate 5 away from the first monitoring ruler 6 by a small distance can make the first extension pointer indicating end 702 move by a long distance, therefore, the graduations on the first distal dial scale 602 is smaller than the graduations on the first proximal dial scale 603, thereby more accurately reflecting the distance that the bottom end of the panel 401 in the second adaptive plate 5 moves relative to the bottom end of the panel 401 in the first adaptive plate 4. In an alternative implementation, the first monitoring ruler 6 may include only one scale.

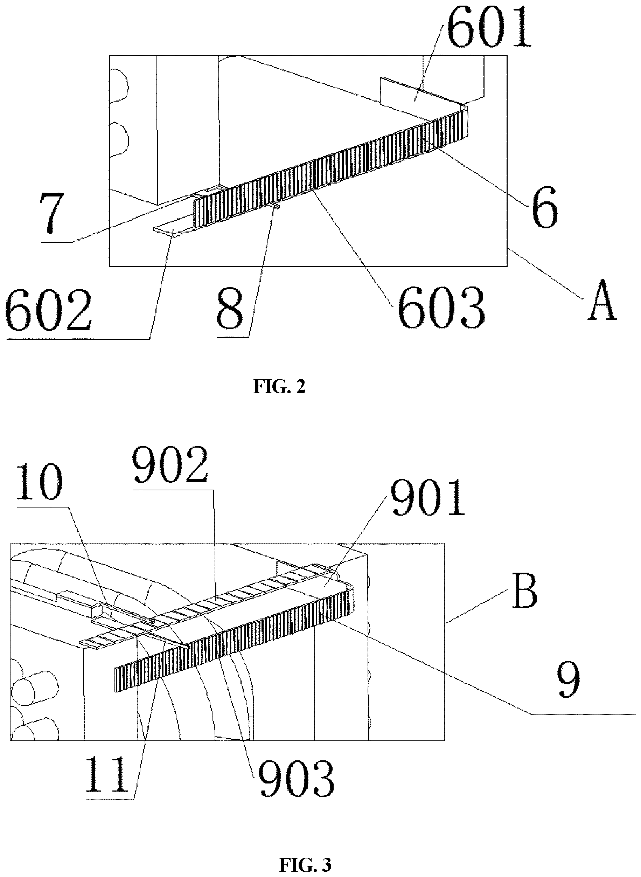

Based on the above implementation, in a preferred implementation, as shown in Fig. 3 and Fig. 5, the second monitoring ruler 9 includes a second monitoring ruler end seat 901, a second distal dial scale 902, and a second proximal dial scale 903. Wherein the second monitoring ruler end seat 901 is fixedly arranged at the top end of the panel 401 in the first adaptive plate 4; the second distal dial scale 902 is vertically connected to the second monitoring ruler end seat 901 and extends towards the panel 401 in the second adaptive plate 5, the second extension pointer indicating end 1002 extends to the second distal dial scale 902; the second proximal dial scale 903 is vertically connected to an end of the second monitoring ruler end seat 901 in an L-shape and extends towards the panel 401 in the second adaptive plate 5, the second pointer indicating end 1102 extends to the second proximal dial scale 903, and the graduations on the second proximal dial scale 903 is denser than the graduations on the second distal dial scale 902. In the present implementation, by setting the second distal dial scale 902 and the second proximal dial scale 903, since the second extension pointer fixed end 1001 is farther away from the second monitoring ruler 9, movement of the end of the panel 401 in the second adaptive plate 5 away from the second monitoring ruler 9 by a small distance can make the second extension pointer indicating end 1002 move by a long distance, therefore, the graduations on the second distal dial scale 902 is smaller than the graduations on the second proximal dial scale 903, thereby more accurately reflecting the distance that the top of the panel 401 in the second adaptive plate 5 moves relative to the top of the panel 401 in the first adaptive plate 4. In an alternative implementation, the second monitoring ruler 9 may include only one scale.

Based on the above implementation, in a preferred implementation, the first extension pointer fixed end 701 and the first extension pointer indicating end 702 are connected to each other by a first rod arm 703, and the cross-sectional area of the first extension pointer indicating end 702 is smaller than the cross-sectional area of the first rod arm 703. As shown in Fig. 4, the first rod arm 703 is an elongated rod, and by making the cross-sectional area of the first extension pointer indicating end 702 smaller than the cross-sectional area of the first rod arm 703, the scale on the first distal dial scale 602 can be more accurately indicated. Of course, in other alternative implementations, when the cross-sectional area of the first rod arm 703 is smaller, the cross-sectional area of the first extension pointer indicating end 702 can also be equal to the cross-sectional area of the first rod arm 703.

As shown in Fig. 4, the end of the first rod arm 703 is provided with a first support 704, and the first extension pointer indicating end 702 is detachably connected onto the first support 704.

Based on the above implementation, in a preferred implementation, the second extension pointer fixed end 1001 and the second extension pointer indicating end 1002 are connected to each other by a second rod arm 1003, and the cross-sectional area of the second extension pointer indicating end 1002 is smaller than the cross-sectional area of the second rod arm 1003. Please further refer to Fig. 4, the second rod arm 1003 is an elongated rod, and by making the cross-sectional area of the second extension pointer indicating end 1002 smaller than the cross-sectional area of the second rod arm 1003, the scale on the second distal dial scale 902 can be more accurately indicated. Of course, in other alternative implementations, when the cross-sectional area of the second rod arm 1003 is smaller, the cross-sectional area of the second extension pointer indicating end 1002 can also be equal to the cross-sectional area of the second rod arm 1003.

Please further refer to Fig. 4, the end of the second rod arm 1003 is provided with a second support 1004, and the second extension pointer indicating end 1002 is detachably connected onto the second support 1004.

Based on the above implementation, in a preferred implementation, the cross-sectional area of the first pointer indicating end 802 is smaller than the cross-sectional area of the first pointer fixed end 801. In combination with Fig. 4, the first pointer indicating end 802 is needle point shaped with a small cross-sectional area, to accurately indicate the scale on the first proximal dial scale 603.

Based on the above implementation, in a preferred implementation, the cross-sectional area of the second pointer indicating end 1102 is smaller than the cross-sectional area of the second pointer fixed end 1101. Please further refer to Fig. 4, the second pointer indicating end 1102 is needle point shaped and has a small cross-sectional area, to accurately indicate the scale on the second proximal dial scale 903.

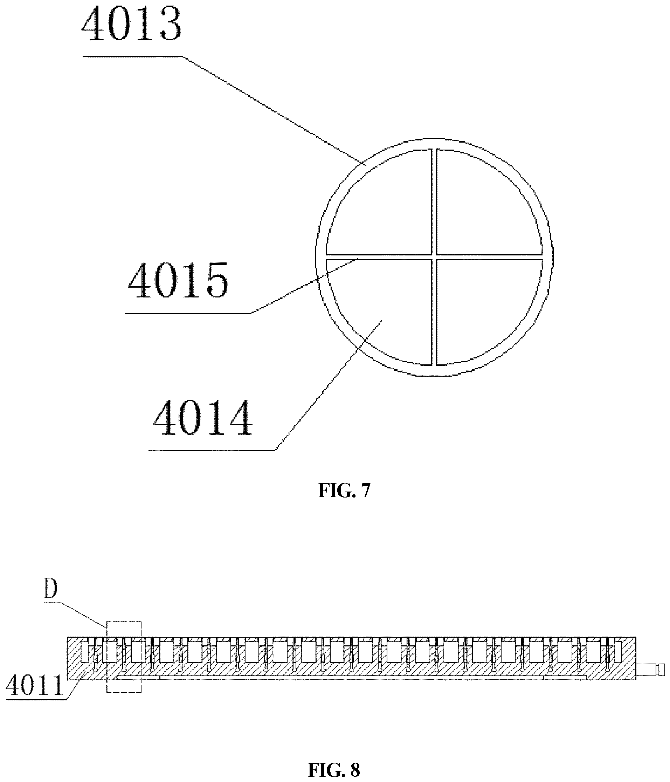

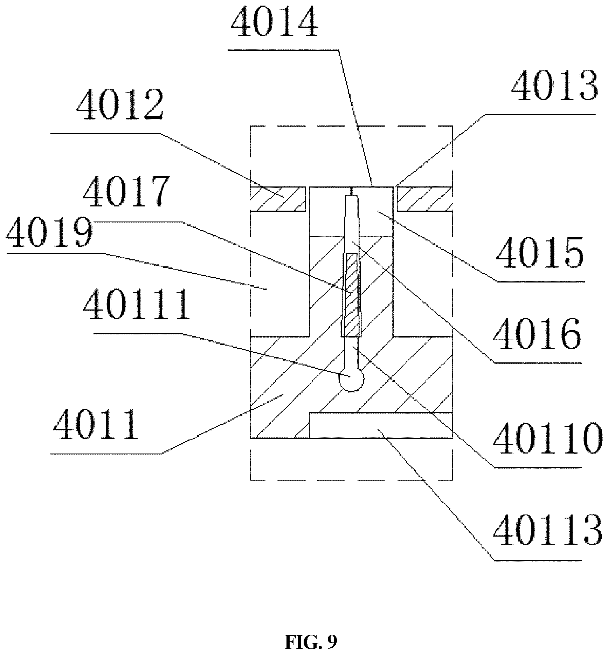

Based on the above implementation, in a preferred implementation, in combination with Fig. 8 and Fig. 9, the blowing chamber 4016 is of a round frustrum shape, the cross-sectional area of the second end of the blowing chamber 4016 is smaller than the cross-sectional area of the first end of the blowing chamber 4016, correspondingly, the pushing member 4017 is of a round frustrum shape, the cross-sectional area of the small end of the pushing member 4017 is slightly greater than the cross-sectional area of the second end of the blowing chamber 4016, the cross-sectional area of a bigger end of the pushing member 4017 is smaller than the cross-sectional area of the first end of the blowing chamber 4016, and the length of the pushing member 4017 is smaller than the length of the blowing chamber 4016. In the present implementation, since the pushing member 4017 is of a round frustrum shape, the cross-sectional area of a smaller end of the pushing member 4017 is slightly greater than the cross-sectional area of the second end of the blowing chamber 4016, in the process of being blown up, the pushing member 4017 is abutted against the inner wall of the blowing chamber 4016 adjacent to its second end, to expand the second end of the blowing chamber 4016, so as to press the expansion slot 4015, such that the expansion slot 4015 expands outwards to abut against the inner wall of the column body 4021 and press tightly the resilient column 402, meanwhile, when the bigger end of the pushing member 4017 moves to a position equal to the cross-sectional area of the blowing chamber 4016, the pushing member 4017 is locked, thereby further ensuring that the adaptively adjusted resilient column 402 is locked within the resilient column hole 4013. In an alternative implementation, the blowing chamber 4016 can be set in a cylindrical shape, and correspondingly the pushing member 4017 can also be set in a cylindrical shape. The pushing member 4017 can be caulked into the expansion slot 4015 such that the expansion slot 4015 expands outwards, after stopping to supply gas to the limiting gas nozzle 4018, the limiting gas nozzle 4018 is closed, and the pushing member 4017 is kept at a locked position by relying on the gas pressure inside the gas channel structure. In another alternative implementation, the blowing chamber 4016 is also set to be of a round frustrum shape, and the pushing member 4017 is set to be of a conical shape, the small end of the pushing member 4017 can be caulked into the expansion slot 4015, and the cross-sectional area of the bigger end of the pushing member 4017 is greater than the cross-sectional area of the second end of the blowing chamber 4016.

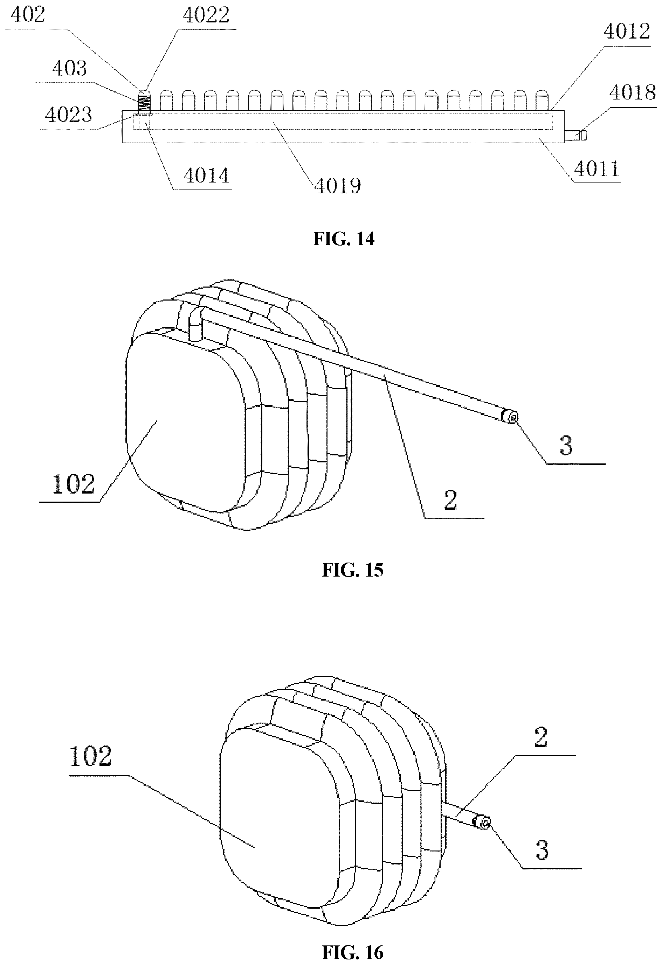

Based on the above implementation, in a preferred implementation, in combination with Fig. 9 and Fig. 14, a cavity 4019 is formed between the bottom cover 4011 and the top cover 4012, and the spring seats 4014 are arranged in the cavity 4019, and each resilient column 402 further includes an annular column seat 4023 fixedly arranged at an end of the column body 4021 away from the column cap 4022, and the annular column seat 4023 is sleeved outside a corresponding spring seat 4014 and is movably arranged between the top wall and the bottom wall of the cavity 4019. In the present implementation, after the adaptive caulking reset device is caulked into a gap, the pressure on the panel 401 is relaxed, that is, the compression on the gas-filled column 1 is relaxed, the compression on the gas-filled column 1 is released, the resilient column 402 and their internal springs 403 are partially compressed according to the flatness of two side walls of the gap, the resilient column 402 is compressed by the side walls of the gap to move along an outer wall of the spring seat 4014, the spring 403 inside the resilient column 402 is compressed and the resilient column 402 itself is not deformed.

Based on the above implementation, in a preferred implementation, as shown in Fig. 7, the expansion slot 4015 is a cross-shaped slot. In the present implementation, since the expansion slot 4015 is cross-shaped, the expansion slot 4015 divides the top of the spring seat 4014 into four fan-shaped structures, when the second end of the expansion slot 4015 is pressed, the four fan-shaped structures upwardly press the resilient column 402. In an alternative implementation, the expansion slot 4015 may be of other shapes, such as including a vertical slot arranged centrally, and at least three radial slots which evenly divide the spring seat 4014 into at least three fan-shaped structures.

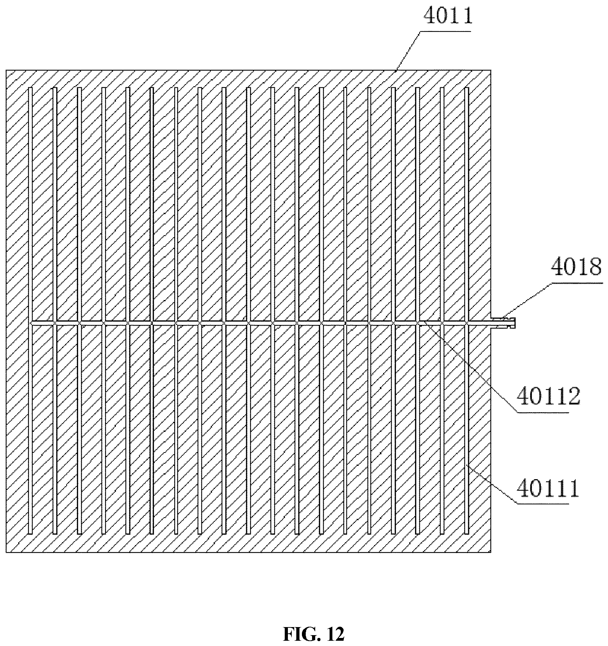

Based on the above implementation, in a preferred implementation, as shown in Fig. 12, the gas channel structure includes sub-gas channels 40110, a branch gas channel 40111, and a main gas channel 40112. Wherein each sub-gas channel 40110 is communicated to a corresponding blowing chamber 4016, and the sub-gas channels 40110 are vertical to the bottom cover 4011; multiple branch gas channels 40111 are arranged, each of the branch gas channels 40111 is communicated to the sub-gas channels 40110 in the same column, and the branch gas channel 40111 is parallel to the outer surface of the bottom cover 4011 towards the buffer assembly; one main gas channel 40112 is arranged, the main gas channel 40112 is communicated with multiple branch gas channels 40111, and the main gas channel 40112 is vertical to the branch gas channel 40111 and is parallel to the outer surface of the bottom cover 4011 towards the buffer assembly, and the limiting gas nozzle 4018 is connected to the main gas channel 40112. In the present implementation, after the adaptive plate is adjusted, a high-pressure gas is fed to the main gas channel 40112 by an external gas pump connected on the limiting gas nozzle 4018, the high-pressure gas enters each sub-gas channel 40110 after passing through each branch gas channel 40111, and then enters the blowing chamber 4016 to blow up the pushing member 4017, the pushing member 4017 presses the expansion slot 4015, the expansion slot 4015 expands outwards to abut against the inner wall of the column body 4021, to press tightly the resilient column 402, the adaptively adjusted resilient column 402 is locked in the resilient column hole 4013, through setting a main gas channel 40112 and multiple sub-gas channels 40111, high-pressure gas can be uniformly fed into each blowing chamber 4016. Of course, in other alternative implementations, the gas channel structure may be arranged in the form of other gas channels capable of feeding high-pressure gas to each individual blowing chamber 4016.

Based on the above implementation, in a preferred implementation, the panel 401 is provided with multiple limiting slots 40113, and the gas-filled columns 1 are arranged in the limiting slots 40113. In the present implementation, the limiting slots 40113 are arranged to facilitate installation and fixation of each gas-filled column 1. Specifically, as shown in Fig. 4, Fig. 15, Fig. 16, Fig. 17 and Fig. 18, two ends of the gas-filled column 1 are closed by the bottom plate 102, and a panel 401 is provided with four limiting slots 40113, the cross-sectional dimension of the limiting slot 40113 is consistent with the cross-sectional dimension of the bottom plate 102. In an alternative implementation, the limiting slots 40113 may not be arranged, and the gas-filled column 1 is fixed to the panel 401 by means of adhesion.

Based on the above implementation, in a preferred implementation, the side walls of the gas-filled column 1 are corrugated. In the present implementation, by setting the side walls of the gas-filled column 1 to be corrugated, contraction and elongation of the gas-filled column 1 are facilitated.

Defining that one end of the adaptive caulking monitoring device provided with the first monitoring ruler 6 and the second monitoring ruler 9 is an outer end and the opposite end is an inner end, the two gas-filled columns 1 adjacent to the inner end are farther away from the outer end, and in order to facilitate the connection between the reset gas nozzle 3 and the gas pump, in combination with Fig. 4, Fig. 15 and Fig. 16, the length of the reset gas tube 2 on these two gas-filled columns 1 is greater than the length of the reset gas tubes 2 on the two gas-filled columns 1 adjacent to the outer end.

### Embodiment 2

The present embodiment provides a caulking reset method applied to the adaptive caulking monitoring device provided in the above embodiment, the caulking reset method includes the following steps:
S1. Compressing the gas-filled columns 1 such that the total thickness of the adaptive caulking monitoring device is smaller than the width of the gap to be caulked, wherein specifically, by applying pressure to the first adaptive plate 4 and the second adaptive plate 5 on the left and right sides of the entire adaptive caulking monitoring device, respectively, the gas-filled column 1 constituting the buffer assembly is compressed, and when the total thickness of the entire adaptive caulking monitoring device is smaller than the width of the gap to be caulked, the adaptive caulking monitoring device can be easily caulked into the gap.
S2. After caulking the adaptive caulking monitoring device into the gap, relaxing the compression on the gas-filled columns 1, such that at least part of the resilient columns 402 and their internal springs 403 are compressed by side walls of the gap, specifically, when the adaptive caulking monitoring device is caulked into a gap, pressure on the first adaptive plate 4 and the second adaptive plate 5 is relaxed, i.e., the compression on the gas-filled column 1 is relaxed, the compression on the gas-filled column 1 is released, and the resilient column 402 and their internal springs 403 are partially compressed according to the flatness of the two side walls of the gap, thereby completing adaptive adjustment of the non-flat side walls.
S3. Feeding a high-pressure gas into the gas channel structure by an external gas pump connected on the limiting gas nozzle 4018, wherein gas enters each blowing chamber 4016 and blows up the pushing member 4017, and the pushing member 4017 presses the expansion slot 4015, the expansion slot 4015 expands outwards to press tightly the resilient column 402, so that the resilient column 402 is locked in the resilient column hole 4013. Specifically, the pushing member 4017 presses the expansion slot 4015, the expansion slot 4015 expands outwards to abut against the inner wall of the column body 4021, and the structures on two sides of the expansion slot 4015 press the column body 4021 and have a greater friction with the inner wall of the column body 4021, the resilient column 402 is pressed tightly, and the adaptively adjusted resilient column 402 is locked within the resilient column hole 4013.
S4. Recording the number indicated by the first extension pointer 7 on the first monitoring ruler 6, the number indicated by the first pointer 8 on the first monitoring ruler 6, the number indicated by the second extension pointer 10 on the second monitoring ruler 9, and the number indicated by the second pointer 11 on the second monitoring ruler 9 as initial values for deformation monitoring of a building member of a gap node.

After the gap has undergone changes in position and shape, the caulking reset method further includes:
S5. feeding gas to the gas-filled columns 1 in turn by the external gas pump connected on the reset gas nozzle 3 for each gas-filled column 1 subject to compression in turn, and adjusting spacing between the first adaptive plate 4 and the second adaptive plate 5 under the supporting effect of the gas-filled columns 1, until the number indicated by the first extension pointer 7 on the first monitoring ruler 6, the number indicated by the first pointer 8 on the first monitoring ruler 6, the number indicated by the second extension pointer 10 on the second monitoring ruler 9 and the number indicated by the second pointer 11 on the second monitoring ruler 9 all reach the initial values. Specifically, for example, when the member is deflected in a horizontal direction, the two gas-filled columns 1 adjacent to the inner end are compressed, while the two gas-filled columns 1 adjacent to the outer end are elongated, at this time, gas is fed to the gas-filled columns 1 by an external gas pump on the reset gas nozzles 3 of the two gas-filled columns 1 adjacent to the inner end in turn, while the reset gas nozzles 3 of the two gas-filled columns 1 adjacent to the outer end do not require an external gas pump, and the member is deflected in a reverse direction under the supporting effect of the gas-filled columns 1; for another example, when the member is deflected in a horizontal direction, the two gas-filled columns 1 adjacent to the outer end are compressed, while the two gas-filled columns 1 adjacent to the inner end are elongated, then gas is fed into the gas-filled columns 1 through the external gas pump on the reset gas nozzles 3 of the two gas-filled columns 1 adjacent to the outer end, while the reset gas nozzles 3 of the two gas-filled columns 1 adjacent to the inner end do not need an external gas pump, under the supporting effect of the gas-filled columns 1, the member is deflected in a reverse direction for resetting; for another example, when the member is twisted in a vertical direction, the two gas-filled columns 1 adjacent to the upper end are compressed, while the two gas-filled columns 1 adjacent to the lower end are elongated. At this time, gas is fed to the gas-filled columns 1 by an external gas pump on the reset gas nozzles 3 of the two gas-filled columns 1 adjacent to the upper end, while the reset gas nozzles 3 of the two gas-filled columns 1 adjacent to the lower end do not require an external gas pump, and the member is deflected in a reverse direction for resetting under the supporting effect of the gas-filled columns 1; for another example, when the member is deflected in a vertical direction, the two gas-filled columns 1 adjacent to the lower end are compressed, while the two gas-filled columns 1 adjacent to the upper end are elongated, then gas is fed into the gas-filled columns 1 through the external gas pump on the reset gas nozzle 3 of the two gas-filled columns 1 adjacent to the lower end, while the reset gas nozzle 3 of the two gas-filled columns 1 adjacent to the upper end do not need an external gas pump, under the supporting effect of the gas-filled columns 1, the member is deflected in a reverse direction for resetting.

## Claims

1. An adaptive caulking monitoring device, comprising:
a buffer assembly, comprising two rows and two columns of gas-filled columns (1), wherein a reset gas hole (101) is formed on a side wall of each of the gas-filled columns (1), the reset gas hole (101) is connected to a reset gas tube (2), and a reset gas nozzle (3) is arranged at an end of the reset gas tube (2);
two adaptive plates, which are respectively a first adaptive plate (4) and a second adaptive plate (5) and which are symmetrically distributed on two sides of the buffer assembly, wherein the first adaptive plate (4) and the second adaptive plate (5) both comprise a panel (401), resilient columns (402) and springs (403), the panel (401) comprises a bottom cover (4011) adjacent to the buffer assembly and a top cover (4012) away from the buffer assembly, multiple rows and columns of resilient column holes (4013) are arranged in an array in the top cover (4012), spring seats (4014) in one-to-one correspondence with the resilient column holes (4013) are distributed in an array in the panel (401), a first end of each spring seat (4014) is fixedly arranged in the bottom cover (4011), a second end of each spring seat (4014) is arranged in a corresponding resilient column hole (4013) and is flush with an outer surface of the top cover (4012), an expansion slot (4015) is arranged in each spring seat (4014), a first end of the expansion slot (4015) is arranged at a second end of the spring seat (4014), a second end of the expansion slot (4015) is arranged in each spring seat (4014), a blowing chamber (4016) is arranged in each spring seat (4014), a first end of the blowing chamber (4016) extends to the first end of the spring seat (4014), a second end of the blowing chamber (4016) extends to the expansion slot (4015), a pushing member (4017) capable of moving along a length direction of the blowing chamber (4016) is arranged in the blowing chamber (4016), the pushing member (4017) is adapted to press the expansion slot (4015) or press a chamber wall of the blowing chamber (4016) adjacent to its second end, a gas channel structure communicated with each blowing chamber (4016) is arranged in the bottom cover (4011), the gas channel structure comprises a limiting gas nozzle (4018) protruding from the panel (401), each resilient column (402) comprises a column body (4021) and a column cap (4022), the column body (4021) is of a hollow structure and is arranged outside a corresponding spring seat (4014), the column cap (4022) is arranged at one end of the column body (4021), a corresponding spring (403) is arranged in the column body (4021) with one end of the spring (403) abutted against a second end of the spring seat (4014) and with the other end of the spring (403) abutted against the column cap (4022);
a monitoring assembly, comprising:
a first monitoring ruler (6), fixedly arranged at the bottom end of the panel (401) in the first adaptive plate (4) and extending towards the panel (401) in the second adaptive plate (5);
a first extension pointer (7), comprising a first extension pointer fixed end (701) and a first extension pointer indicating end (702), wherein the first extension pointer fixed end (701) is fixedly arranged at the bottom end of the panel (401) in the second adaptive plate (5) and located at a side away from the monitoring ruler (6), and the first extension pointer indicating end (702) extends to the first monitoring ruler (6);
a first pointer (8), comprising a first pointer fixed end (801) and a first pointer indicating end (802), wherein the first pointer fixed end (801) is fixedly arranged at the bottom end of the panel (401) in the second adaptive plate (5) and located at a side adjacent to the first monitoring ruler (6), and the first pointer indicating end (802) extends to the first monitoring ruler (6);
a second monitoring ruler (9), fixedly arranged at the top end of the panel (401) in the first adaptive plate (4) and extending towards the panel (401) in the second adaptive plate (5), wherein the second monitoring ruler (9) and the first monitoring ruler (6) are arranged on the same side of the first adaptive plate (4) and the second adaptive plate (5);
a second extension pointer (10), comprising a second extension pointer fixed end (1001) and a second extension pointer indicating end (1002), wherein the second extension pointer fixed end (1001) is fixedly arranged at the top end of the panel (401) in the second adaptive plate (5) and located at a side away from the second monitoring ruler (9), and the second extension pointer indicating end (1002) extends to the second monitoring ruler (9);
a second pointer (11), comprising a second pointer fixed end (1101) and a second pointer indicating end (1102), wherein the second pointer fixed end (1101) is fixedly arranged at the top end of the panel (401) in the second adaptive plate (5) and located at a side adjacent to the second monitoring ruler (9), and the second pointer indicating end (1102) extends to the second monitoring ruler (9).

2. The adaptive caulking monitoring device of claim 1, wherein the first monitoring ruler (6) comprises: a first monitoring ruler end seat (601) fixedly arranged at the bottom end of the panel (401) in the first adaptive plate (4);
a first distal dial scale (602), vertically connected to the first monitoring ruler end seat (601) and extending towards the panel (401) in the second adaptive plate (5), wherein the first extension pointer indicating end (702) extends to the first distal dial scale (602);
a first proximal dial scale (603), vertically connected to an end of the first monitoring ruler end seat (601) to form an L-shape and extending towards the panel (401) in the second adaptive plate (5), wherein the first pointer indicating end (802) extends to the first proximal dial scale (603), and the graduations on the first proximal dial scale (603) is denser than the graduations on the first distal dial scale (602);
and/or, the second monitoring ruler (9) comprises:
a second monitoring ruler end seat (901), fixedly arranged at the top end of the panel (401) in the first adaptive plate (4);
a second distal dial scale (902), vertically connected to the second monitoring ruler end seat (901) and extending towards the panel (401) in the second adaptive plate (5), wherein the second extension pointer indicating end (1002) extends to the second distal dial scale (902); and
a second proximal dial scale (903), vertically connected to an end of the second monitoring ruler end seat (901) to form an L-shape and extending towards the panel (401) in the second adaptive plate (5), wherein the second pointer indicating end (1102) extends to the second proximal dial scale (903), and the graduations on the second proximal dial scale (903) is denser than the graduations on the second distal dial scale (902).

3. The adaptive caulking monitoring device of claim 1, wherein the first extension pointer fixed end (701) and the first extension pointer indicating end (702) are connected to each other by a first rod arm (703), and a cross-sectional area of the first extension pointer indicating end (702) is smaller than a cross-sectional area of the first rod arm (703);
and/or, the second extension pointer fixed end (1001) and the second extension pointer indicating end (1002) are connected to each other by a second rod arm (1003), and a cross-sectional area of the second extension pointer indicating end (1002) is smaller than a cross-sectional area of the second rod arm (1003).

4. The adaptive caulking monitoring device of claim 1, wherein a cross-sectional area of the first pointer indicating end (802) is smaller than a cross-sectional area of the first pointer fixed end (801);
and/or, a cross-sectional area of the second pointer indicating end (1102) is smaller than a cross-sectional area of the second pointer fixed end (1101).

5. The adaptive caulking monitoring device of claim 1, wherein the blowing chamber (4016) is of a round frustrum shape, the cross-sectional area of the second end of the blowing chamber (4016) is smaller than the cross-sectional area of the first end of the blowing chamber (4016), correspondingly, the pushing member (4017) is of a round frustrum shape, the cross-sectional area of a smaller end of the pushing member (4017) is slightly greater than the cross-sectional area of the second end of the blowing chamber ( 4016), the cross-sectional area of a bigger end of the pushing member (4017) is smaller than the cross-sectional area of the first end of the blowing chamber (4016), and the length of the pushing member (4017) is smaller than the length of the blowing chamber (4016).

6. The adaptive caulking monitoring device of any one of claims 1-5, wherein a cavity (4019) is formed between the bottom cover (4011) and the top cover (4012), the spring seats (4014) are arranged in the cavity (4019), each resilient column (402) further comprises an annular column seat (4023) fixedly arranged at an end of the column body (4021) away from the column cap ( 4022), and the annular column seat (4023) is sleeved outside a corresponding spring seat (4014) and is movably arranged between a top wall and a bottom wall of the cavity (4019).

7. The adaptive caulking monitoring device of any one of claims 1-5, wherein the expansion slot (4015) is a cross-shaped slot.

8. The adaptive caulking monitoring device of any one of claims 1-5, wherein the gas channel structure comprises:
sub-gas channels (40110), each communicated to a corresponding blowing chamber (4016), wherein the sub-gas channels (40110) are vertical to the bottom cover (4011);
multiple branch gas channels (40111), wherein each of the branch gas channels (40111) is communicated to the sub-gas channels (40110) arranged in the same column, and the branch gas channel (40111) is parallel to the outer surface of the bottom cover (4011) facing towards the buffer assembly; and
a main gas channel (40112), wherein the main gas channel (40112) is communicated to the multiple branch gas channels (40111), the main gas channel (40112) is vertical to the branch gas channels (40111) and is parallel to the outer surface of the bottom cover (4011) facing towards the buffer assembly, and the limiting gas nozzle (4018) is connected to the main gas channel (40112).

9. The adaptive caulking monitoring device of any one of claims 1-5, wherein the panel (401) is provided with multiple limiting slots (40113), and the gas-filled columns (1) are arranged in the limiting slots (40113);
and/or, the side wall of the gas-filled column (1) is corrugated.

10. A caulking reset method applied to the adaptive caulking monitoring device of any one of claims 1-9, wherein the caulking reset method comprises:
S1. compressing the gas-filled columns (1) such that the total thickness of the adaptive caulking monitoring device is smaller than the width of the gap to be caulked;
S2. after caulking the adaptive caulking monitoring device into the gap, relaxing the compression on the gas-filled columns (1), such that at least part of the resilient columns (402) and their internal springs (403) are compressed by side walls of the gap;
S3. feeding a high-pressure gas into the gas channel structure by an external gas pump connected on the limiting gas nozzle (4018), wherein gas enters each blowing chamber (4016) and blows up the pushing member (4017), the pushing member (4017) presses the expansion slot (4015), the expansion slot (4015) expands outwards to tightly press the resilient column (402), so that the resilient column (402) is locked in the resilient column hole (4013);
S4. recording the number indicated by the first extension pointer (7) on the first monitoring ruler (6), the number indicated by the first pointer (8) on the first monitoring ruler (6), the number indicated by the second extension pointer (10) on the second monitoring ruler (9), and the number indicated by the second pointer (11) on the second monitoring ruler (9) as initial values for deformation monitoring of a building member of a gap node; and
when the gap has undergone changes in position and shape, the caulking reset method further comprises:
S5. feeding gas to the gas-filled columns (1) in turn by the external gas pump connected on the reset gas nozzle (3) for each gas-filled column (1) subject to compression in turn, and adjusting spacing between the first adaptive plate (4) and the second adaptive plate (5) under the supporting effect of the gas-filled columns (1), until the number indicated by the first extension pointer (7) on the first monitoring ruler (6), the number indicated by the first pointer (8) on the first monitoring ruler (6), the number indicated by the second extension pointer (10) on the second monitoring ruler (9), and the number indicated by the second pointer (11) on the second monitoring ruler (9) all reach the initial values.

## Patentansprüche

1. Adaptive Verstemmüberwachungsvorrichtung, umfassend:
eine Pufferbaugruppe, umfassend zwei Reihen und zwei Spalten aus gasgefüllten Säulen (1), wobei ein Rückstellgasloch (101) auf einer Seitenwand jeder der gasgefüllten Säulen (1) ausgebildet ist, das Rückstellgasloch (101) mit einem Rückstellgasrohr (2) verbunden ist und eine Rückstellgasdüse (3) an einem Ende des Rückstellgasrohrs (2) angeordnet ist;
zwei adaptive Platten, die jeweils eine erste adaptive Platte (4) und eine zweite adaptive Platte (5) sind und die symmetrisch auf zwei Seiten der Pufferbaugruppe verteilt sind, wobei die erste adaptive Platte (4) und die zweite adaptive Platte (5) beide eine Tafel (401), elastische Säulen (402) und Federn (403) umfassen, die Tafel (401) eine an die Pufferbaugruppe angrenzende untere Abdeckung (4011) und eine von der Pufferbaugruppe abgewandte obere Abdeckung (4012) umfasst, mehrere Reihen und Spalten von Löchern (4013) für elastische Säulen in einer Gruppierung in der oberen Abdeckung (4012) angeordnet sind, Federaufnahmen (4014) in einer Eins-zu-eins-Entsprechung zu den Löchern (4013) für elastische Säulen in einer Gruppierung in der Tafel (401) verteilt sind, ein erstes Ende jeder Federaufnahme (4014) in der unteren Abdeckung (4011) fest angeordnet ist, ein zweites Ende jeder Federaufnahme (4014) in einem entsprechenden Loch (4013) für elastische Säulen angeordnet ist und bündig mit einer Außenoberfläche der oberen Abdeckung (4012) ist, ein Expansionsschlitz (4015) in jeder Federaufnahme (4014) angeordnet ist, ein erstes Ende des Expansionsschlitzes (4015) an einem zweiten Ende der Federaufnahme (4014) angeordnet ist, ein zweites Ende des Expansionsschlitzes (4015) in jeder Federaufnahme (4014) angeordnet ist, eine Blaskammer (4016) in jeder Federaufnahme (4014) angeordnet ist, ein erstes Ende der Blaskammer (4016) sich zu dem ersten Ende der Federaufnahme (4014) erstreckt, ein zweites Ende der Blaskammer (4016) sich zu dem Expansionsschlitz (4015) erstreckt, ein Schubelement (4017), das in der Lage ist, sich entlang einer Längsrichtung der Blaskammer (4016) zu bewegen, in der Blaskammer (4016) angeordnet ist, das Schubelement (4017) angepasst ist, um auf den Expansionsschlitz (4015) zu drücken oder auf eine an ihr zweites Ende angrenzende Kammerwand der Blaskammer (4016) zu drücken, eine Gaskanalstruktur, die mit jeder Blaskammer (4016) in Verbindung steht, in der unteren Abdeckung (4011) angeordnet ist, die Gaskanalstruktur eine Begrenzungsgasdüse (4018), die von der Tafel (401) hervorsteht, umfasst, jede elastische Säule (402) einen Säulenkörper (4021) und eine Säulenkappe (4022) umfasst, der Säulenkörper (4021) aus einer hohlen Struktur besteht und außerhalb einer entsprechenden Federaufnahme (4014) angeordnet ist, die Säulenkappe (4022) an einem Ende des Säulenkörpers (4021) angeordnet ist, eine entsprechende Feder (403) in dem Säulenkörper (4021) angeordnet ist, wobei ein Ende der Feder (403) an einem zweiten Ende der Federaufnahme (4014) anliegt und wobei das andere Ende der Feder (403) an der Säulenkappe (4022) anliegt;
eine Überwachungsbaugruppe, umfassend:
ein erstes Überwachungslineal (6), das an dem unteren Ende der Tafel (401) in der ersten adaptiven Platte (4) fest angeordnet ist und sich zu der Tafel (401) hin in der zweiten adaptiven Platte (5) erstreckt;
einen ersten Erweiterungszeiger (7), umfassend ein festes Ende (701) des ersten Erweiterungszeigers und ein Anzeigeende (702) des ersten Erweiterungszeigers, wobei das feste Ende (701) des ersten Erweiterungszeigers an dem unteren Ende der Tafel (401) in der zweiten adaptiven Platte (5) angeordnet ist und sich an einer von dem Überwachungslineal (6) abgewandten Seite befindet, und das Anzeigeende (702) des ersten Erweiterungszeigers sich bis zu dem ersten Überwachungslineal (6) erstreckt;
einen ersten Zeiger (8), umfassend ein festes Ende (801) des ersten Zeigers und ein Anzeigeende (802) des ersten Zeigers, wobei das feste Ende (801) des ersten Zeigers an dem unteren Ende der Tafel (401) in der zweiten adaptiven Platte (5) fest angeordnet ist und sich an einer an das erste Überwachungslineal (6) angrenzenden Seite befindet, und das Anzeigeende (802) des ersten Zeigers sich bis zu dem ersten Überwachungslineal (6) erstreckt;
ein zweites Überwachungslineal (9), das an dem oberen Ende der Tafel (401) in der ersten adaptiven Platte (4) fest angeordnet ist und sich zu der Tafel (401) hin in der zweiten adaptiven Platte (5) erstreckt, wobei das zweite Überwachungslineal (9) und das erste Überwachungslineal (6) auf der gleichen Seite der ersten adaptiven Platte (4) und der zweiten adaptiven Platte (5) angeordnet sind;
einen zweiten Erweiterungszeiger (10), umfassend ein festes Ende (1001) des zweiten Erweiterungszeigers und ein Anzeigeende (1002) des zweiten Erweiterungszeigers, wobei das feste Ende (1001) des zweiten Erweiterungszeigers an dem oberen Ende der Tafel (401) in der zweiten adaptiven Platte (5) fest angeordnet ist und sich an einer von dem zweiten Überwachungslineal (9) abgewandten Seite befindet, und das Anzeigeende (1002) des zweiten Erweiterungszeigers sich bis zu dem zweiten Überwachungslineal (9) erstreckt;
einen zweiten Zeiger (11), umfassend ein festes Ende (1101) des zweiten Zeigers und ein Anzeigeende (1102) des zweiten Zeigers, wobei das feste Ende (1101) des zweiten Zeigers an dem oberen Ende der Tafel (401) in der zweiten adaptiven Platte (5) fest angeordnet ist und sich an einer an das zweite Überwachungslineal angrenzenden Seite (9) befindet, und das Anzeigeende (1102) des zweiten Zeigers sich bis zu dem zweiten Überwachungslineal (9) erstreckt.

2. Adaptive Verstemmüberwachungsvorrichtung nach Anspruch 1, wobei das erste Überwachungslineal (6) umfasst: eine Endaufnahme (601)des ersten Überwachungslineals, die an dem unteren Ende der Tafel (401) in der ersten adaptiven Platte (4) fest angeordnet ist;
eine erste distale Ringskala (602), die mit der Endaufnahme (601) des ersten Überwachungslineals vertikal verbunden ist und sich zu der Tafel (401) hin in der zweiten adaptiven Platte (5) erstreckt, wobei sich das Anzeigeende (702) des ersten Erweiterungszeigers bis zu der ersten distalen Ringskala (602) erstreckt;
eine erste proximale Ringskala (603), die mit einem Ende der Endaufnahme (601) des ersten Überwachungslineals vertikal verbunden ist, um eine L-Form auszubilden, und sich zu der Tafel (401) hin in der zweiten adaptiven Platte (5) erstreckt, wobei das Anzeigeende (802) des ersten Zeigers sich bis zu der ersten proximalen Ringskala (603) erstreckt und die Teilungen auf der ersten proximalen Ringskala (603) dichter als die Teilungen auf der ersten distalen Ringskala (602) sind;
und/oder das zweite Überwachungslineal (9) umfasst:
eine Endaufnahme (901) des zweiten Überwachungslineals, die an dem oberen Ende der Tafel (401) in der ersten adaptiven Platte (4) fest angeordnet ist;
eine zweite distale Ringskala (902), die mit der Endaufnahme (901) des zweiten Überwachungslineals vertikal verbunden ist und sich zu der Tafel (401) hin in der zweiten adaptiven Platte (5) erstreckt, wobei das Anzeigeende (1002) des zweiten Erweiterungszeigers sich bis zu der zweiten distalen Ringskala (902) erstreckt; und
eine zweite proximale Ringskala (903), die mit einem Ende der Endaufnahme (901) des zweiten Überwachungslineals vertikal verbunden ist, um eine L-Form auszubilden, und sich zu der Tafel (401) hin in der zweiten adaptiven Platte (5) erstreckt, wobei das Anzeigeende (1102) des zweiten Zeigers sich bis zu der zweiten proximalen Ringskala (903) erstreckt und die Teilungen auf der zweiten proximalen Ringskala (903) dichter als die Teilungen auf der zweiten distalen Ringskala (902) sind.

3. Adaptive Verstemmüberwachungsvorrichtung nach Anspruch 1, wobei das feste Ende (701) des ersten Erweiterungszeigers und das Anzeigeende (702) des ersten Erweiterungszeigers durch einen ersten Stangenarm (703) miteinander verbunden sind und ein Querschnittsbereich des Anzeigeendes (702) des ersten Erweiterungszeigers kleiner als ein Querschnittsbereich des ersten Stangenarms (703) ist;
und/oder das feste Ende (1001) des zweiten Erweiterungszeigers und das Anzeigeende (1002) des zweiten Erweiterungszeigers durch einen zweiten Stangenarm (1003) miteinander verbunden sind und ein Querschnittsbereich des Anzeigeendes (1002) des zweiten Erweiterungszeigers kleiner als ein Querschnittsbereich des zweiten Stangenarms (1003) ist.

4. Adaptive Verstemmüberwachungsvorrichtung nach Anspruch 1, wobei ein Querschnittsbereich des Anzeigeendes (802) des ersten Zeigers kleiner als ein Querschnittsbereich des festen Endes (801) des ersten Zeigers ist;
und/oder ein Querschnittsbereich des Anzeigeendes (1102) des zweiten Zeigers kleiner als ein Querschnittsbereich des festen Endes (1101) des zweiten Zeigers ist.

5. Adaptive Verstemmüberwachungsvorrichtung nach Anspruch 1, wobei die Blaskammer (4016) aus einer runden Kegelstumpfform besteht, der Querschnittsbereich des zweiten Endes der Blaskammer (4016) kleiner als der Querschnittsbereich des ersten Endes der Blaskammer (4016) ist, entsprechend, das Schubelement (4017) aus einer runden Kegelstumpfform besteht, der Querschnittsbereich eines kleineren Endes des Schubelements (4017) geringfügig größer als der Querschnittsbereich des zweiten Endes der Blaskammer (4016) ist, der Querschnittsbereich eines umfangreicheren Endes des Schubelements (4017) kleiner als der Querschnittsbereich des ersten Endes der Blaskammer (4016) ist und die Länge des Schubelements (4017) kleiner als die Länge der Blaskammer (4016) ist.

6. Adaptive Verstemmüberwachungsvorrichtung nach einem der Ansprüche 1 bis 5, wobei zwischen der unteren Abdeckung (4011) und der oberen Abdeckung (4012) ein Hohlraum (4019) ausgebildet ist, die Federaufnahmen (4014) in dem Hohlraum (4019) angeordnet sind, jede elastische Säule (402) ferner eine ringförmige Säulenaufnahme (4023), die an einem von der Säulenkappe (4022) abgewandten Ende des Säulenkörpers (4021) fest angeordnet ist, umfasst und die ringförmige Säulenaufnahme (4023) außerhalb einer entsprechenden Federaufnahme (4014) ummantelt ist und zwischen einer oberen Wand und einer unteren Wand des Hohlraums (4019) bewegbar angeordnet ist.

7. Adaptive Verstemmüberwachungsvorrichtung nach einem der Ansprüche 1 bis 5, wobei der Expansionsschlitz (4015) ein kreuzförmiger Schlitz ist.

8. Adaptive Verstemmüberwachungsvorrichtung nach einem der Ansprüche 1 bis 5, wobei die Gaskanalstruktur umfasst:
Untergaskanäle (40110), wobei jeder mit einer entsprechenden Blaskammer (4016) in Verbindung steht, wobei die Untergaskanäle (40110) vertikal zu der unteren Abdeckung (4011) sind;
mehrere Zweiggaskanäle (40111), wobei jeder der Zweiggaskanäle (40111) mit den Untergaskanälen (40110), die in der gleichen Säule angeordnet sind, in Verbindung steht und der Zweiggaskanal (40111) parallel zu der Außenoberfläche der unteren Abdeckung (4011) ist, die zu der Pufferbaugruppe hin gewandt ist; und
einen Hauptgaskanal (40112), wobei der Hauptgaskanal (40112) mit den mehreren Zweiggaskanälen (40111) in Verbindung steht, der Hauptgaskanal (40112) vertikal zu den Zweiggaskanälen (40111) und parallel zu der Außenoberfläche der unteren Abdeckung (4011) ist, die zu der Pufferbaugruppe hin gewandt ist, und die Begrenzungsgasdüse (4018) mit dem Hauptgaskanal (40112) verbunden ist.

9. Adaptive Verstemmüberwachungsvorrichtung nach einem der Ansprüche 1 bis 5, wobei die Tafel (401) mit mehreren Begrenzungsschlitzen (40113) versehen ist und die gasgefüllten Säulen (1) in den Begrenzungsschlitzen (40113) angeordnet sind;
und/oder die Seitenwand der gasgefüllten Säule (1) gewellt ist.

10. Verstemmrückstellverfahren, das auf die adaptive Verstemmüberwachungsvorrichtung nach einem der Ansprüche 1 bis 9 angewendet wird, wobei das Verstemmrückstellverfahren umfasst:
S1. derartiges Komprimieren der gasgefüllten Säulen (1), dass die Gesamtdicke der adaptiven Verstemmüberwachungsvorrichtung kleiner als die Breite des zu verstemmenden Spalts ist;
S2. nach einem Verstemmen der adaptiven Verstemmüberwachungsvorrichtung in den Spalt, derartiges Lösen der Kompression auf den gasgefüllten Säulen (1), dass mindestens ein Teil der elastischen Säulen (402) und ihrer inneren Federn (403) durch die Seitenwände des Spalts komprimiert werden;
S3. Zuführen eines Hochdruckgases in die Gaskanalstruktur durch eine externe Gaspumpe, die mit der Begrenzungsgasdüse (4018) verbunden ist, wobei Gas in jede Blaskammer (4016) eintritt und das Schubelement (4017) aufbläst, das Schubelement (4017) auf den Expansionsschlitz (4015) drückt, der Expansionsschlitz (4015) sich nach außen expandiert, um fest auf die elastische Säule (402) zu drücken, sodass die elastische Säule (402) in dem Loch (4013) für elastische Säulen verriegelt wird;
S4. Aufzeichnen der durch den ersten Erweiterungszeiger (7) auf dem ersten Überwachungslineal (6) angezeigten Zahl, der durch den ersten Zeiger (8) auf dem ersten Überwachungslineal (6) angezeigten Zahl, der durch den zweiten Erweiterungszeiger (10) auf dem zweiten Überwachungslineal (9) angezeigten Zahl und der durch den zweiten Zeiger (11) auf dem zweiten Überwachungslineal (9) angezeigten Zahl als Anfangswerte für eine Verformungsüberwachung eines Bauelements eines Spaltknotens; und
wenn sich eine Position und Form des Spalts geändert haben, das Verstemmrückstellverfahren ferner umfasst:
S5. Zuführen von Gas zu den gasgefüllten Säulen (1) nacheinander durch die externe Gaspumpe, die mit der Rückstellgasdüse (3) für jede gasgefüllte Säule (1), die der Kompression ausgesetzt ist, verbunden ist, und Anpassen eines Abstands zwischen der ersten adaptiven Platte (4) und der zweiten adaptiven Platte (5) unter der Stützwirkung der gasgefüllten Säulen (1), bis die durch den ersten Erweiterungszeiger (7) auf dem ersten Überwachungslineal (6) angezeigte Zahl, die durch den ersten Zeiger (8) auf dem ersten Überwachungslineal (6) angezeigte Zahl, die durch den zweiten Erweiterungszeiger (10) auf dem zweiten Überwachungslineal (9) angezeigte Zahl und die durch den zweiten Zeiger (11) auf dem zweiten Überwachungslineal (9) angezeigte Zahl alle die Anfangswerte erreichen.

## Revendications

1. Dispositif adaptatif de surveillance de calfeutrage, comprenant :
un ensemble tampon, comprenant deux rangées et deux colonnes de colonnes remplies de gaz (1), dans lequel un trou à gaz de réinitialisation (101) est formé sur une paroi latérale de chacune des colonnes remplies de gaz (1), le trou à gaz de réinitialisation (101) est relié à un tube à gaz de réinitialisation (2), et une buse à gaz de réinitialisation (3) est agencée au niveau d'une extrémité du tube à gaz de réinitialisation (2) ;
deux plaques adaptatives, qui sont respectivement une première plaque adaptative (4) et une seconde plaque adaptative (5) et qui sont réparties symétriquement sur deux côtés de l'ensemble tampon, dans lequel la première plaque adaptative (4) et la seconde plaque adaptative (5) comprennent toutes deux un panneau (401), des colonnes résilientes (402) et des ressorts (403), le panneau (401) comprend un couvercle inférieur (4011) adjacent à l'ensemble tampon et un couvercle supérieur (4012) éloigné de l'ensemble tampon, de multiples rangées et colonnes de trous de colonne résiliente (4013) sont agencées en réseau dans le couvercle supérieur (4012), des sièges de ressort (4014) en correspondance biunivoque avec les trous de colonne résiliente (4013) sont répartis en réseau dans le panneau (401), une première extrémité de chaque siège de ressort (4014) est agencée de manière fixe dans le couvercle inférieur (4011), une seconde extrémité de chaque siège de ressort (4014) est agencée dans un trou de colonne résiliente (4013) correspondant et affleure une surface extérieure du couvercle supérieur (4012), une fente d'expansion (4015) est agencée dans chaque siège de ressort (4014), une première extrémité de la fente d'expansion (4015) est agencée au niveau d'une seconde extrémité du siège de ressort (4014), une seconde extrémité de la fente d'expansion (4015) est agencée dans chaque siège de ressort (4014), une chambre de soufflage (4016) est agencée dans chaque siège de ressort (4014), une première extrémité de la chambre de soufflage (4016) s'étend jusqu'à la première extrémité du siège de ressort (4014), une seconde extrémité de la chambre de soufflage (4016) s'étend jusqu'à la fente d'expansion (4015), un élément poussoir (4017) capable de se déplacer le long d'une direction longitudinale de la chambre de soufflage (4016) est agencé dans la chambre de soufflage (4016), l'élément poussoir (4017) est adapté pour presser la fente d'expansion (4015) ou presser une paroi de chambre de la chambre de soufflage (4016) adjacente à sa seconde extrémité, une structure de canal de gaz communiquant avec chaque chambre de soufflage (4016) est agencée dans le couvercle inférieur (4011), la structure du canal de gaz comprend une buse à gaz de limitation (4018) saillant du panneau (401), chaque colonne résiliente (402) comprend un corps de colonne (4021) et un capuchon de colonne (4022), le corps de colonne (4021) a une structure creuse et est agencé à l'extérieur d'un siège de ressort (4014) correspondant, le capuchon de colonne (4022) est agencé au niveau d'une extrémité du corps de colonne (4021), un ressort (403) correspondant est agencé dans le corps de colonne (4021) avec une extrémité du ressort (403) en butée contre une seconde extrémité du siège de ressort (4014) et avec l'autre extrémité du ressort (403) en butée contre le capuchon de colonne (4022) ;
un ensemble de surveillance comprenant :
une première règle de surveillance (6), agencée de manière fixe au niveau de l'extrémité inférieure du panneau (401) dans la première plaque adaptative (4) et s'étendant vers le panneau (401) dans la seconde plaque adaptative (5) ;
une première aiguille d'extension (7), comprenant une première extrémité fixée d'aiguille d'extension (701) et une première extrémité indiquant une aiguille d'extension (702), dans lequel la première extrémité fixée d'aiguille d'extension (701) est agencée de manière fixe au niveau de l'extrémité inférieure du panneau (401) dans la seconde plaque adaptative (5) et située au niveau d'un côté éloigné de la règle de surveillance (6), et la première extrémité indiquant une aiguille d'extension (702) s'étend jusqu'à la première règle de surveillance (6) ;
une première aiguille (8), comprenant une première extrémité fixée d'aiguille (801) et une première extrémité indiquant une aiguille (802), dans lequel la première extrémité fixée d'aiguille (801) est agencée de manière fixe au niveau de l'extrémité inférieure du panneau (401) dans la seconde plaque adaptative (5) et située au niveau d'un côté adjacent à la première règle de surveillance (6), et la première extrémité indiquant une aiguille (802) s'étend jusqu'à la première règle de surveillance (6) ;
une seconde règle de surveillance (9), agencée de manière fixe au niveau de l'extrémité supérieure du panneau (401) dans la première plaque adaptative (4) et s'étendant vers le panneau (401) dans la seconde plaque adaptative (5), dans lequel la seconde règle de surveillance (9) et la première règle de surveillance (6) sont agencées sur le même côté de la première plaque adaptative (4) et de la seconde plaque adaptative (5) ;
une seconde aiguille d'extension (10), comprenant une seconde extrémité fixée d'aiguille d'extension (1001) et une seconde extrémité indiquant une aiguille d'extension (1002), dans lequel la seconde extrémité fixée d'aiguille d'extension (1001) est agencée de manière fixe au niveau de l'extrémité supérieure du panneau (401) dans la seconde plaque adaptative (5) et située au niveau d'un côté éloigné de la seconde règle de surveillance (9), et la seconde extrémité indiquant une aiguille d'extension (1002) s'étend jusqu'à la seconde règle de surveillance (9) ;
une seconde aiguille (11), comprenant une seconde extrémité fixée d'aiguille (1101) et une seconde extrémité indiquant une aiguille (1102), dans lequel la seconde extrémité fixée d'aiguille (1101) est agencée de manière fixe au niveau de l'extrémité supérieure du panneau (401) dans la seconde plaque adaptative (5) et située au niveau d'un côté adjacent à la seconde règle de surveillance (9), et la seconde extrémité indiquant une aiguille (1102) s'étend jusqu'à la seconde règle de surveillance (9).

2. Dispositif adaptatif de surveillance de calfeutrage selon la revendication 1, dans lequel la première règle de surveillance (6) comprend : un premier siège d'extrémité de règle de surveillance (601) agencé de manière fixe au niveau de l'extrémité inférieure du panneau (401) dans la première plaque adaptative (4) ;
une première échelle de cadran distale (602), reliée verticalement au premier siège d'extrémité de règle de surveillance (601) et s'étendant vers le panneau (401) dans la seconde plaque adaptative (5), dans lequel la première extrémité indiquant une aiguille d'extension (702) s'étend jusqu'à la première échelle de cadran distale (602) ;
une première échelle de cadran proximale (603), reliée verticalement à une extrémité du premier siège d'extrémité de règle de surveillance (601) pour former un L et s'étendant vers le panneau (401) dans la seconde plaque adaptative (5), dans lequel la première extrémité indiquant une aiguille (802) s'étend jusqu'à la première échelle de cadran proximale (603), et les graduations sur la première échelle de cadran proximale (603) sont plus denses que les graduations sur la première échelle de cadran distale (602) ;
et/ou, la seconde règle de surveillance (9) comprend :
un second siège d'extrémité de règle de surveillance (901), agencé de manière fixe au niveau de l'extrémité supérieure du panneau (401) dans la première plaque adaptative (4) ;
une seconde échelle de cadran distale (902), reliée verticalement au second siège d'extrémité de règle de surveillance (901) et s'étendant vers le panneau (401) dans la seconde plaque adaptative (5), dans lequel la seconde extrémité indiquant une aiguille d'extension (1002) s'étend jusqu'à la seconde échelle de cadran distale (902) ; et
une seconde échelle de cadran proximale (903), reliée verticalement à une extrémité du second siège d'extrémité de règle de surveillance (901) pour former un L et s'étendant vers le panneau (401) dans la seconde plaque adaptative (5), dans lequel la seconde extrémité indiquant une aiguille (1102) s'étend jusqu'à la seconde échelle de cadran proximale (903), et les graduations sur la seconde échelle de cadran proximale (903) sont plus denses que les graduations sur la seconde échelle de cadran distale (902).

3. Dispositif adaptatif de surveillance de calfeutrage selon la revendication 1, dans lequel la première extrémité fixée d'aiguille d'extension (701) et la première extrémité indiquant une aiguille d'extension (702) sont reliées l'une à l'autre par un premier bras de tige (703), et une section transversale de la première extrémité indiquant une aiguille d'extension (702) est plus petite qu'une section transversale du premier bras de tige (703) ;
et/ou la seconde extrémité fixée d'aiguille d'extension (1001) et la seconde extrémité indiquant une aiguille d'extension (1002) sont reliées l'une à l'autre par un second bras de tige (1003), et une section transversale de la seconde extrémité indiquant une aiguille d'extension (1002) est plus petite qu'une section transversale du second bras de tige (1003).

4. Dispositif adaptatif de surveillance de calfeutrage selon la revendication 1, dans lequel une section transversale de la première extrémité indiquant une aiguille (802) est plus petite qu'une section transversale de la première extrémité fixée d'aiguille (801) ;
et/ou, une section transversale de la seconde extrémité indiquant une aiguille (1102) est plus petite qu'une section transversale de la seconde extrémité fixée d'aiguille (1101).

5. Dispositif adaptatif de surveillance de calfeutrage selon la revendication 1, dans lequel la chambre de soufflage (4016) a une forme de tronc ronde, la section transversale de la seconde extrémité de la chambre de soufflage (4016) est plus petite que la section transversale de la première extrémité de la chambre de soufflage (4016), de manière correspondante, l'élément poussoir (4017) a une forme de tronc ronde, la section transversale d'une plus petite extrémité de l'élément poussoir (4017) est légèrement plus grande que la section transversale de la seconde extrémité de la chambre de soufflage (4016), la section transversale d'une plus grande extrémité de l'élément poussoir (4017) est plus petite que la section transversale de la première extrémité de la chambre de soufflage (4016), et la longueur de l'élément poussoir (4017) est plus petite que la longueur de la chambre de soufflage (4016).

6. Dispositif adaptatif de surveillance de calfeutrage selon l'une quelconque des revendications 1 à 5, dans lequel une cavité (4019) est formée entre le couvercle inférieur (4011) et le couvercle supérieur (4012), les sièges de ressort (4014) sont agencés dans la cavité (4019), chaque colonne résiliente (402) comprend en outre un siège de colonne annulaire (4023) agencé de manière fixe au niveau d'une extrémité du corps de colonne (4021) éloignée du capuchon de colonne (4022), et le siège de colonne annulaire (4023) est recouvert d'un manchon à l'extérieur d'un siège de ressort (4014) correspondant et est agencé de manière mobile entre une paroi supérieure et une paroi inférieure de la cavité (4019).

7. Dispositif adaptatif de surveillance de calfeutrage selon l'une quelconque des revendications 1 à 5, dans lequel la fente d'expansion (4015) est une fente en forme de croix.

8. Dispositif adaptatif de surveillance de calfeutrage selon l'une quelconque des revendications 1 à 5, dans lequel la structure de canal de gaz comprend :
des canaux de sous-gaz (40110), chacun communiquant avec une chambre de soufflage (4016) correspondante, dans lequel les canaux de sous-gaz (40110) sont verticaux par rapport au couvercle inférieur (4011) ;
de multiples canaux de gaz de dérivation (40111), dans lequel chacun des canaux de gaz de dérivation (40111) communique avec les canaux de sous-gaz (40110) agencés dans la même colonne, et le canal de gaz de dérivation (40111) est parallèle à la surface extérieure du couvercle inférieur (4011) orienté vers l'ensemble tampon ; et
un canal de gaz principal (40112), dans lequel le canal de gaz principal (40112) communique avec les multiples canaux de gaz de dérivation (40111), le canal de gaz principal (40112) est vertical par rapport aux canaux de gaz de dérivation (40111) et est parallèle à la surface extérieure du couvercle inférieur (4011) orienté vers l'ensemble tampon, et la buse à gaz de limitation (4018) est reliée au canal de gaz principal (40112).

9. Dispositif adaptatif de surveillance de calfeutrage selon l'une quelconque des revendications 1 à 5, dans lequel le panneau (401) est pourvu de multiples fentes de limitation (40113), et les colonnes remplies de gaz (1) sont agencées dans les fentes de limitation (40113) ;
et/ou, la paroi latérale de la colonne remplie de gaz (1) est ondulée.

10. Procédé de réinitialisation de calfeutrage appliqué au dispositif adaptatif de surveillance de calfeutrage selon l'une quelconque des revendications 1 à 9, dans lequel le procédé de réinitialisation de calfeutrage comprend :
S1. la compression des colonnes remplies de gaz (1) de telle sorte que l'épaisseur totale du dispositif adaptatif de surveillance de calfeutrage est plus petite que la largeur de l'espace à calfeutrer ;
S2. après le calfeutrage du dispositif adaptatif de surveillance de calfeutrage dans l'espace, le relâchement de la compression sur les colonnes remplies de gaz (1), de telle sorte qu'au moins une partie des colonnes résilientes (402) et de leurs ressorts (403) internes est comprimée par les parois latérales de l'espace ;
S3. l'alimentation en gaz à haute pression de la structure de canal de gaz par une pompe à gaz externe reliée à la buse à gaz de limitation (4018), dans lequel le gaz entre dans chaque chambre de soufflage (4016) et souffle l'élément poussoir (4017), l'élément poussoir (4017) presse la fente d'expansion (4015), la fente d'expansion (4015) s'étend vers l'extérieur pour presser étroitement la colonne résiliente (402), de telle sorte que la colonne résiliente (402) est verrouillée dans le trou de colonne résiliente (4013) ;
S4. l'enregistrement du nombre indiqué par la première aiguille d'extension (7) sur la première règle de surveillance (6), le nombre indiqué par la première aiguille (8) sur la première règle de surveillance (6), le nombre indiqué par la seconde aiguille d'extension (10) sur la seconde règle de surveillance (9), et le nombre indiqué par la seconde aiguille (11) sur la seconde règle de surveillance (9) comme valeurs initiales pour la surveillance de déformation d'un élément de construction d'un noeud d'espace ; et
lorsque l'espace a subi des changements de position et de forme, le procédé de réinitialisation de calfeutrage comprend en outre :
S5. l'alimentation en gaz des colonnes remplies de gaz (1) à tour de rôle par la pompe à gaz externe reliée à la buse à gaz de réinitialisation (3) pour chaque colonne remplie de gaz (1) soumise à compression à tour de rôle, et l'ajustement de l'espacement entre la première plaque adaptative (4) et la seconde plaque adaptative (5) sous l'effet de soutien des colonnes remplies de gaz (1), jusqu'à ce que le nombre indiqué par la première aiguille d'extension (7) sur la première règle de surveillance (6), le nombre indiqué par la première aiguille (8) sur la première règle de surveillance (6), le nombre indiqué par le seconde aiguille d'extension (10) sur la seconde règle de surveillance (9) et le nombre indiqué par la seconde aiguille (11) sur la seconde règle de surveillance (9) atteignent tous les valeurs initiales.
